# EUROPEAN PATENT APPLICATION

(11) **EP 4 086 596 A1**
(43) Date of publication of application: **09.11.2022**
(21) Application number: 21172629.4
(22) Date of filing: 07.05.2021
(51) Int. Cl.: G01G 19/52

(54) **A METHOD, A SYSTEM, AND A SENSOR UNIT FOR MEASURING LOAD**

(71) Applicant: Forciot OY, 33720 Tampere (FI)
(72) Inventor: ISO-KETOLA, Pekka, 38200 SASTAMALA (FI); VAPAAKOSKI, Simo, 33680 TAMPERE (FI); LIIMATTA, Toni, 33720 TAMPERE (FI); TURUNEN, Mikko, 37800 AKAA (FI); JULKUNEN, Tytti, 33920 PIRKKALA (FI)
(74) Representative: Berggren Oy

(57) **Abstract**

A method for measuring a load (F) that is distributed on a primary area (Af). The method comprises at least a first sensor unit (100a) and a second sensor unit (100b) such that a first part of the load (F) affects the first sensor unit (100a), a second part of the load (F) affects the second sensor unit (100b), and the set of sensor units cover the whole primary area (Af). The method comprises determining, using the first sensor unit (100a), first information (11) indicative of a first part of the load (F), determining, using the second sensor unit (100b), second information (12) indicative of the second part of the load (F), transmitting the first information (11) and receiving the first information (11), and determining the load using (F) the first information (11) and the second information (12). A system for the same. A sensor unit (100) for the system or the method.

## Description

### Technical field

The invention relates to systems for measuring load, i.e. mass or weight. The invention relates to methods for measuring load. The invention relates to sensor units of such systems and methods.

### Background

In storage and transportation applications one often needs to determine a load, i.e. a mass or a weight, of a large object, such as a pallet. For example, a size of an Euro-pallet is typically 1200 mm by 800 mm. To measure a weight of goods on a pallet, a size of the scale should be at least of the same order. Moreover, oftentimes it is preferable to measure a weight of several pallets simultaneously and/or a weight of even larger objects. The several pallets may be arranged side by side. Thus, even larger scales may be needed. Large scales are hard to move from one place to another, and they are often reasonably expensive.

### Summary

It has been found that a large scale can be assembled from multiple (e.g. at least two) sensor units. The sensor units themselves may be reasonably small and lightweight, whereby, once disassembled, they can easily be moved to another location, if needed. A sensor unit that is cheap and lightweight and suitable for such purpose is disclosed. Preferable such a sensor unit is based on the capacitive load measurement principle.

Embodiments of a method for measuring the load is disclosed in the appended examples 201 to 214. Embodiments of a system for measuring the load are presented in examples 101 to 129. The system comprises at least a sensor unit. Embodiments of the sensor unit are disclosed in examples 301 to 334. Other parts of the specification explain these examples and illustrate further embodiments.

In line with these examples, a system for measuring a load is disclosed in the independent claim 1, a method for measuring a load is disclosed in independent claim 11, and a sensor unit is disclosed in claim 15. The sensor unit is suitable for use as a sensor unit of the system or in the method.

### Brief description of the drawings

- Fig. 1a: shows a sensor unit as seen from top,
- Fig. 1b: shows the sensor unit if Fig. 1a as seen from bottom,
- Fig. 1c: shows a cross-section of a sensor unit, as seen from a side,
- Fig. 1d: shows a sensor unit in a perspective view,
- Fig. 2a: shows a cross-section of a sensor unit, as seen from a side,
- Fig. 2b: shows a cross-section of a sensor unit, as seen from a side,
- Fig. 2c: shows a cross-section of a sensor unit, as seen from a side,
- Fig. 3a: shows a system for measuring load, as seen from bottom, the system comprising two sensor units and two fastening members,
- Fig. 3b: shows a fastening member for fastening a first sensor unit to a second sensor unit,
- Fig. 3c: shows a system for measuring load, as seen in a perspective view, the system comprising two sensor units and two fastening members,
- Fig. 4a: shows a system for measuring load, as seen from bottom, the system comprising two sensor units and two fastening members,
- Fig. 4b: shows a fastening member for fastening a first sensor unit to a second sensor unit,
- Fig. 5a: shows a system for measuring load, as seen from bottom, the system comprising four sensor units and five fastening members,
- Fig. 5b: shows a fastening member for fastening a first sensor unit to a second, a third, and a fourth sensor units,
- Fig. 5c: shows a system for measuring load, as seen in a perspective view, the system comprising four sensor units and five fastening members,
- Fig. 5d: shows, in a perspective view, a system for measuring a load distributed on four sensor units,
- Fig. 5e: shows, in a perspective view, a system for measuring a load distributed on four sensor units and data transfer from the sensor units,
- Fig. 5f: shows, in a perspective view, a system for measuring a load distributed on two sensor units and data transfer in between the sensor units and from the first sensor unit,
- Fig. 5g: shows, in a perspective view, a system for measuring a load distributed on two sensor units and data transfer in between the sensor units,
- Fig. 5h: shows, in a perspective view, a system for measuring a load distributed on two sensor units and data transfer in between the sensor units and data transfer from the sensor units,
- Fig. 6a: shows a system for measuring load, as seen from bottom, the system comprising four sensor units and four fastening members,
- Fig. 6b: shows a sensor unit of the system of Fig. 6a,
- Fig. 7a: shows a system comprising two connected sensor units, a smallest convex space encompassing the two sensor units, and a cross-sectional area of the smallest convex space,
- Fig. 7b: shows four sensor units detached from each other and their cross-sectional areas,
- Fig. 7c: shows a system comprising four connected sensor units, a smallest convex space encompassing the sensor units, and a cross-sectional area of the smallest convex space,
- Fig. 8a: shows a cross-section of a sensor unit having two compressible layers, as seen from a side,
- Fig. 8b: shows a cross-section of a sensor unit having two compressible layers, as seen from a side,
- Fig. 8c: shows a cross-section of a sensor unit having one compressible layer, as seen from a side, an electrically conductive layer forming a primary surface,
- Fig. 8d: shows a cross-section of a sensor unit having one compressible layer, as seen from a side, an electrically conductive layer forming a secondary surface,
- Fig. 9a: shows an electrode layer of a sensor unit, the electrode layer having sixteen electrodes (for clarity, wires to only two electrodes have been shown),
- Fig. 9b: shows an electrode layer of a sensor unit, the electrode layer having sixteen electrodes and dummy wires for compensating an effect of the wires on the capacitance (for clarity, wires to only two electrodes and corresponding dummy wires have been shown),
- Fig. 9c: shows an electrode layer of a sensor unit, the electrode layer having sixteen electrodes (for clarity, wires to only two electrodes have been shown), each electrode i having an effective area Aᵢ (i=301, 302, ..., 316),
- Fig. 10a: shows, in a perspective view, a system for measuring a load distributed on two sensor units and data transfer in between the sensor units and from the second sensor unit,
- Fig. 10b: shows, in a perspective view, a system for measuring a load distributed on two sensor units and data transfer from the sensor units,
- Fig. 10c: shows, in a perspective view, a system for measuring a load distributed on two sensor units and data transfer in between the sensor units, the second sensor unit comprising a display,
- Fig. 10d: shows, in a perspective view, a system for measuring a load distributed on two sensor units and data transfer in between the sensor units and from the second sensor unit, and
- Fig. 10e: shows a system for measuring a load distributed on two sensor units, data transfer from the sensor units, and a separate temperature sensor for taking into account the temperature.

In the figures Sx, Sy, and Sz are three orthogonal directions. The direction Sz is a direction of a thickness of a sensor unit, which, in a typical use, is vertical. The direction Sz may be, in use, upwards or downwards. However, if the sensor unit comprises a display, the display preferably faces upwards.

### Detailed description

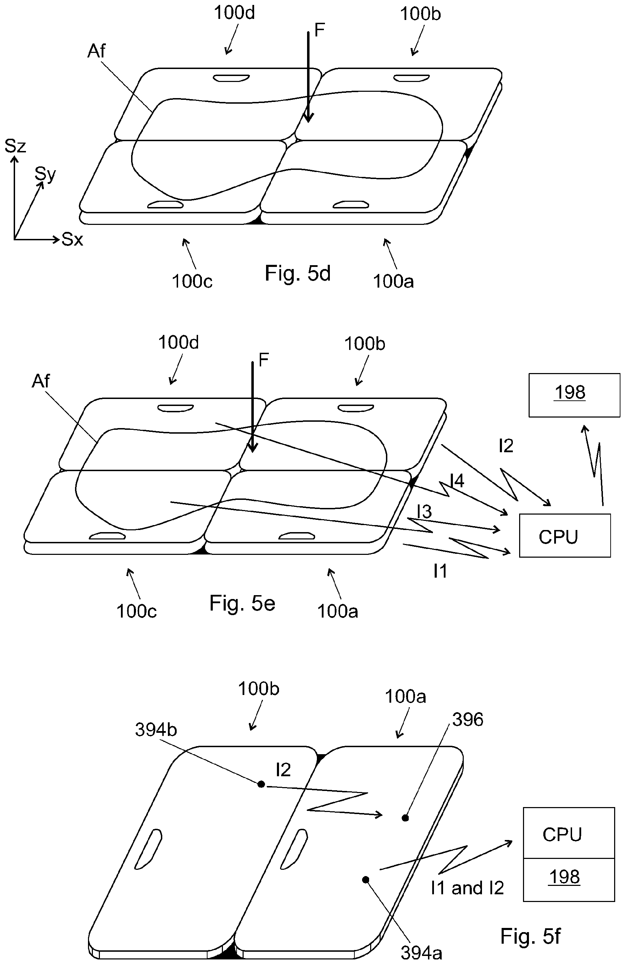

Referring to Figs. 5d and 5e, the embodiments are related to a method for measuring a load F that is distributed on a primary area Af. Throughout this description, the term "load" is used to indicate a mass or a weight of a combination of objects (e.g. arranged side by side, living and/or lifeless) or an object (living or lifeless), such as a pallet, a vehicle (optionally with cargo or passengers), a trailer, a pet, or a shipping container. The load is indicated by the letter F and it is distributed on the primary area Af. The load F needs not be uniformly distributed. The force F needs not affect at all parts of the area Af. E.g. a bottom of a pallet typically consists of three parallel planks, whereby the load F acts only through these planks, even if a size of the pallet may be e.g. 1200 mm by 800 mm.

In the method, sensor units 100a, 100b, 100c, 100c are used. The figures show embodiments with two or four sensor units 100. However, as will become clear, more sensor units can be used in a similar manner, depending on the size of the object(s) to be weighed.

The method comprises arranging available a set of sensor units (100, 100a, 100b, 100c, 100d). The set of sensor units refers to the sensor units used in the method. The set of sensor units may comprise a multitude of sensor units. However, the set of sensor units comprises at least a first sensor unit 100a and a second sensor unit 100b, as show e.g. in Fig. 5f. As shown in Figs. 5d and 5e, in the method, the sensor units of the set of sensor units are arranged such that simultaneously
- a first part of the load F affects the first sensor unit 100a,
- a second part of the load F affects the second sensor unit 100b,
- the set of sensor units covers the whole primary area Af.

As for the term "whole primary area Af", it is noted that the set of sensor units need to cover only such parts, wherein the load F actually affects (i.e. the pressure caused by the load is more than zero). However, the set of sensor units may cover a larger area, i.e. also areas that are not affected by the load F. As will be detailed below, preferably, the sensor units are connected to each other such that substantially no gaps are left in between the sensor units. Thus, preferably, the sensor units fully cover at least such an area that is a smallest convex area encompassing all such points of the load F that are greater than zero. One or more sensor units (e.g. a third or a fourth sensor unit) may be arranged on locations wherein the load F does not affect (not shown).

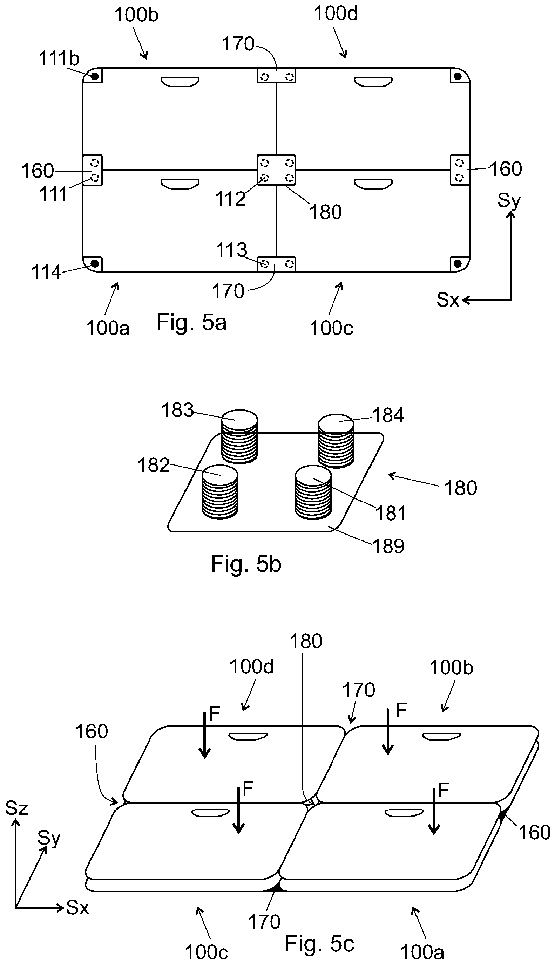

As shown in Fig. 5e, a first part of the load F affects the first sensor unit 100a and a second part of the load F affects the second sensor unit 100b. Moreover, in the embodiments of Figs. 5d and 5e a third part of the load F affects the third sensor unit 100c and a fourth part of the load F affects the fourth sensor unit 100d. Since the set of sensor units covers the whole primary area Af, the load F is divided only to the parts affecting the different sensor units 100 (herein and below the reference number 100 is used to indicate a sensor unit or sensor units in general).

The method comprises determining, using the first sensor unit 100a, first information I1 indicative of the first part of the load F. The method comprises determining, using the second sensor unit 100b, second information I2 indicative of the second part of the load F. In case more sensor units are used, the method comprises using other sensor units (100c, 100d) other information (I3, I4) indicative of other part(s) of the load F. The method comprises determining the load F using the first information I1 and the second information I2. In case more sensor units are used, also the other information (I3, I4) indicative of other part(s) of the load F is used to determine the load F.

The sensor units 100 of the set of sensor units are preferably arranged such that a direction of a thickness of each sensor unit 100 is parallel to the direction of thickness of the first sensor unit 100a. Typically, in use, the direction of thickness of the first sensor unit 100a is substantially vertical. Thus, preferably in use, the direction of thickness of all the sensor units 100 of the set of sensor units is substantially vertical. Moreover, as depicted in the figures, preferably a sensor unit of the set of sensor units does not overlap (in the direction of thickness) with another sensor unit of the set of sensor units. In other words, preferably, the sensor units are arranged side-by-side. In other words, preferably, the sensor units are not arranged even partly on top of each other. Thus, in an embodiment, the sensor units of the set of sensor units are arranged such that a plane that has a normal to a direction of the thickness of first sensor unit 100a intersects all the sensor units of the set of sensor units. It is noted that the sensor units 100 may be arranged on a planar surface, such as a floor.

Referring to Fig. 5e, in an embodiment, each one of the sensor units (100a, 100b, 100c, 100d) is configured to transmit the information (I1, I2, I3, I4) indicative of the part of the load F that affects the respective sensor unit to a processor CPU. Then, the processor CPU may be configured to determine the load using F the first information I1 and the second information I2 (and also the other information I3, I4). While the system, when in use, comprises a CPU as discussed above, the system, when sold, may comprise only the sensor units 100 without such a separate CPU. Instead, when a handheld device, such a mobile phone, comprises the CPU, the processing for determining the load F based in the pieces of information I1, I2, I3, I4 may be performed by a piece of software, such as an application, that is run on the handheld device. Thus, the system, as sold, need not comprise the CPU.

Referring to Fig. 5f, in an embodiment, each one of the sensor units (100a, 100b) is configured to transmit at least the information (I1, I2) indicative of the part of the load F that affects the respective sensor. However, a sensor unit may transmit the information to another sensor unit; e.g. the second sensor unit 100b may transmit the information I2 to the first sensor unit 100a. Then, the first sensor unit 100a may transmit both the first information I1 and the second information I2 to the processor CPU. The processor CPU may be configured to determine the load F using the first information I1 and the second information I2. Clearly the information can be transferred between the sensor units also in case the system comprises more than two sensor units.

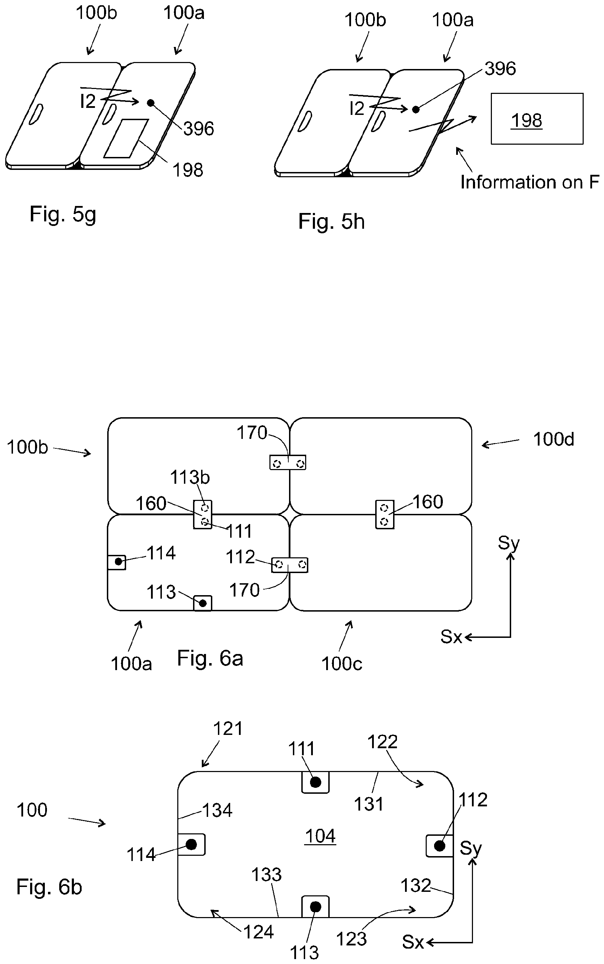

Referring to Figs. 5g and 5h, the processor (not shown) may be arranged in one of the sensor units, e.g. the first sensor unit 100a. Thus, the second sensor unit 100b may be configured to transmit the second information I2 to the first sensor unit 100a. To receive the information I2, the first sensor unit 100a may comprise a receiver 396. However, the first sensor unit 100a need not transmit the first information I1. Instead, the first sensor unit 100a may e.g. display a value indicative of the load F. Thus, the first sensor unit 100a may comprise a display 198. Referring to Fig. 5h, the first sensor unit 100a may transfer information indicative only of the total load F.

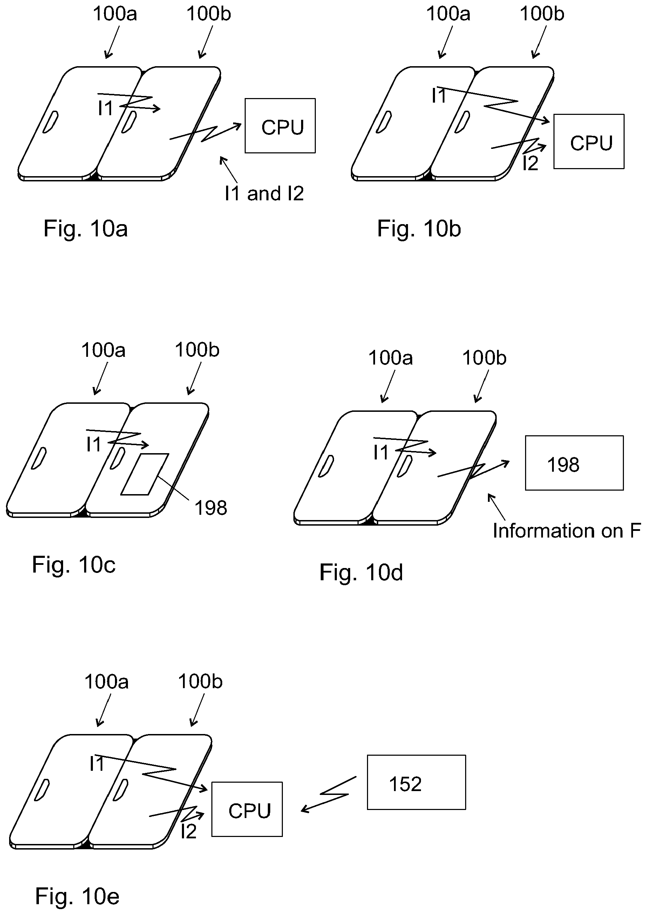

Thus, the method comprises transmitting the second information I2 and receiving the second information I2. The second information I2 may be received by the first sensor unit 100a or the processor CPU. The processor may be comprised by the first sensor unit 100a, but need not be. The processor CPU may be comprised by a handheld device, such as a mobile phone. As readable from Figs. 5g, 5h, 10c, and 10d is it immaterial, which one of the sensor units is called as the first and which one the second. Thus, an embodiment comprises transmitting the first information I1 and receiving the first information I1. The first information I1 may be received by the second sensor unit 100b or the processor CPU.

Preferably, however, a separate processor CPU is used at least to show the value of the load. This is beneficial, since in such a case the sensor units 100 can be kept simple and identical. Thus, preferably, the method further comprises [a] transmitting and receiving the first information I1 or [b] transmitting and receiving information indicative of the load F. As for [a] reference is made to Figs. 5e and 5f. As for [b] reference is made to Fig. 5h. Preferably, the method further comprises displaying information indicative of the load F.

Transmitting information from a sensor unit to another sensor unit or to the processor is preferably done wirelessly. Thus, preferably, the information is transmitted using electromagnetic radiation. While transmitting can be done through electric wires, assembling the sensor units together is much simpler, when wireless data transfer is used.

In a preferable embodiment, the set of sensor units further comprises a third sensor unit 100c and a fourth sensor unit 100d. The embodiment comprises arranging the sensor units of the set of sensor units such that a third part of the load F affects the third sensor unit 100c and a fourth part of the load F affects the fourth sensor unit 100d. Reference is made to Figs. 5d and 5e. The embodiment further comprises determining, using the third sensor unit 100c, third information I3 indicative of a third part of the load F; and determining, using the fourth sensor unit 100d, fourth information I4 indicative of the fourth part of the load F.

As detailed above the third and fourth information I3, I4 may be transmitted to the processor CPU or to the first sensor unit 100a. The first sensor unit 100a may send the information I3, I4 to a processor CPU or the first sensor unit 100a may determine the load F.

Therefore, the embodiment comprises transmitting and receiving the third information I3, transmitting and receiving the fourth information I4, and determining the load F using, in addition to the first information I1 and the second information I2, also the third information I3 and the fourth information 14.

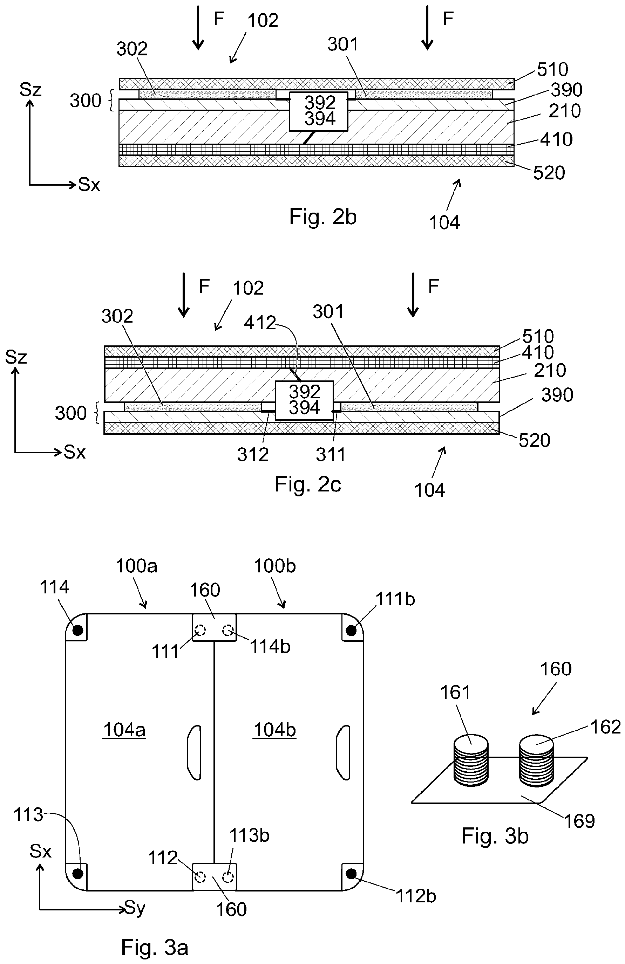

In the method, preferably, the sensor units 100 are fixed to each other at least when performing the measurements. However, after the measurements, the sensor units may be detached from each other. The sensor units 100 may comprise fasteners 111, 112, 113, 114 for the purpose. A system may comprise fastening members 160, 170, 180 for fixing the sensor units 100 to each other. Fastening members are shown e.g. in Fig. 3a, 3b, 4a, 4b, 5a, and 5b and will be discussed in more detail below.

Thus, an embodiment of the method comprises fixing each sensor unit of the set of sensor units to at least one other sensor unit of the set of sensor units. For example, in the embodiment of Fig. 5f, the first sensor unit 100a may be fixed to the second sensor unit 100b. For example, in the embodiments of Fig. 5d and 6a, the first sensor unit 100a may be fixed to the second sensor unit 100b and the third sensor unit 100c. Referring to Fig. 5a, the first sensor unit 100a may be fixed also to the fourth sensor unit 100d, but need not be, as shown in Fig. 6a. Figs. 5a and 6a show detachable fastening members 160, 170, 180 for the purpose of fixing the sensor units 100 to each other. However, a sensor unit 100 may comprise such fasteners that the sensor units 100 can be fixed to each other without a detachable fastening member.

An embodiment comprises detaching the sensor units of the set of sensor units from each other. When detachable fastening members 160, 170, 180 are used, the detachable fastening members 160, 170, 180 may be detached from the sensor units 100. For example, fastening members similar to those of Fig. 3b could be formed as part of the first sensor unit 100a in a similar manner as in Fig. 3a. In such a case, the second sensor unit 100b could be attached to and detached from the first sensor unit 100a without a detachable fastening member, since the first sensor unit 100a would already comprise such a member (though not detachable from the first sensor unit 100a).

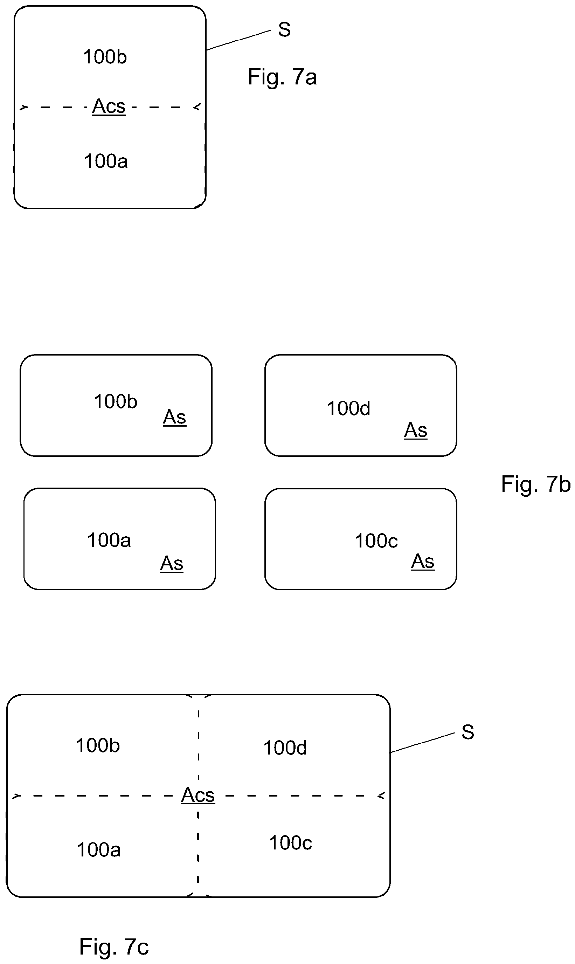

Preferably, the sensor units 100 are fixed to each other (i.e. each sensor unit of the set of sensor units is fixed to at least one other sensor unit of the set of sensor units) such that no gaps or only small gaps remain between the sensor units 100, as seen e.g. in Figs. 5d, 5f, and Figs. 7a to 7c. This has the beneficial effect that the distributed load F can be measured accurately. In Fig. 7a the sensor units 100a and 100b are fixed to each other. In Fig. 7c the sensor units 100a, 100b, 100c, and 100d are fixed to each other. Fig. 7b shows the sensor units detached from each other. As seen from Fig. 7b, when detached, a gap between the sensor units may be large. Naturally, when detached, the sensor units may be e.g. stored by stacking them onto each other, however, in such a storage position, such that a plane that has a normal to a direction of the thickness of first sensor unit 100a does not intersect any other sensor unit.

To quantify the smallness of the gaps, an embodiment comprises fixing the sensor units 100 of the set of sensor units such that when fixed to each other, a cross-sectional area Acs of a smallest convex space S encompassing all of the sensor units of the set of sensor units is at most 10 % greater than the cross sectional area of the separate sensor units. The term "convex space" refers, as conventional, to such a space, wherein any two points within the convex space can be connected by a straight line segment that is encompassed by the convex space. I.e. given any two points of the convex space, the convex space contains the whole line segment that joins the two points. The cross-sectional area Acs is the area of a cross section of smallest such space, the cross section having a normal to the direction of thickness of the first sensor unit 100a. Typically, the direction of thickness of the first sensor unit 100a is substantially vertical. Preferably, simultaneously a plane that has a normal to a direction of the thickness of first sensor unit 100a intersects all the sensor units of the set of sensor units. Thus, preferably, the cross-sectional area Acs of the smallest convex space S encompassing all of the sensor units of the set of sensor units is at least equal to the cross sectional area of the separate sensor units.

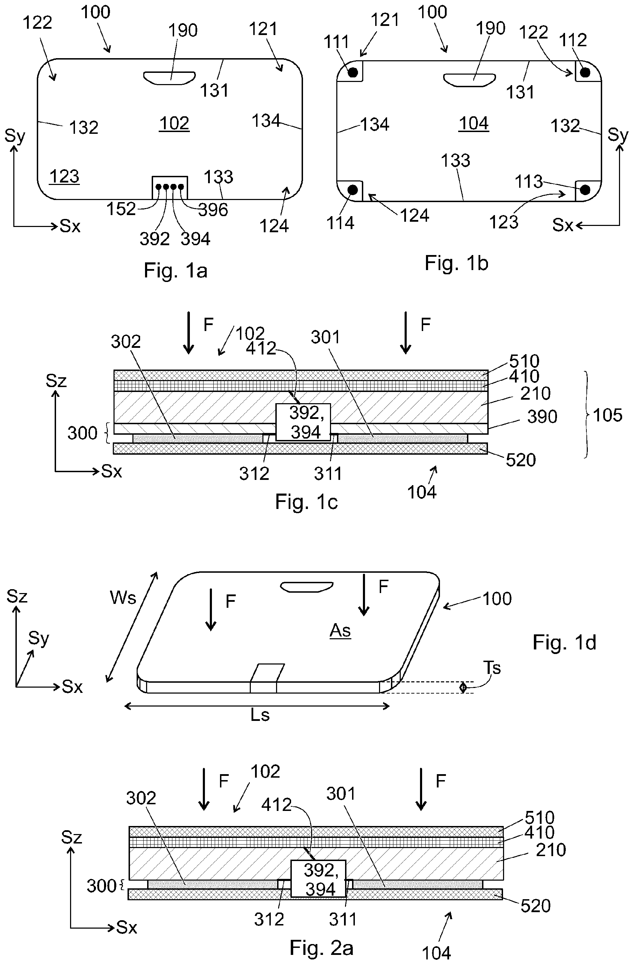

As for the cross sectional area of each one of the separate sensor units, this area is considered to be the cross-sectional area determined by a perimeter of the cross-section of the separate sensor unit. This applies also in case the separate sensor unit comprises one or more apertures, such as a handle 190 (see Fig. 1a).

For example, in Fig. 7a the cross-sectional area Acs of the smallest convex space S encompassing both the sensor units 100a, 100b is only slightly larger than total cross-sectional area of the separate sensor units 100a, 100b. For example, when the sensor units 100a, 100b are identical and each one of them has a cross-sectional area As, as indicated in Fig. 7b, the total cross-sectional area of the separate sensor units 100a, 100b is 2×As. However, because of the rounding of the four corners of each one of the sensor units 100a, 100b, and because the convex space S does not have corresponding roundings on its sides (see Fig. 7a), the cross-sectional area Acs is somewhat larger than 2×As even if no gap would be arranged between the sensor units 100a, 100b. Naturally, if a gap is arranged between the sensor units 100a, 100b, the cross-sectional area Acs of the convex space S increases. The cross-sectional areas of the separate sensor units 100 are determined from such cross sections that have a normal to a direction of thickness of the sensor unit of which cross-sectional area is determined.

What has been said above applies *mutatis mutandis* to Fig. 7c. Therein the total cross-sectional area of the separate sensor units 100a, 100b, 100c, 100d is 4×As. The edges of the convex space S are straight, whereby the area Acs is somewhat larger than 4×As. Moreover, the convex space S does not comprise a hole in the centre. This is another reason, why the area Acs is somewhat larger than 4×As. This applies even if no gap is left in between the edges of the sensor units.

Technical details of the system for measuring load and a sensor unit 100 are given below.

A system for measuring the load F, which is distributed over the primary area Af, comprises at least a sensor unit 100, i.e. a first sensor unit 100a, and preferably also a second sensor unit 100b.

As for details of a sensor unit 100 as such, Fig. 1a shows, as seen from top, a first sensor unit 100, whereby a first primary surface 102 of the sensor unit 100 is shown. Fig. 1b, shows, as seen from bottom, the sensor unit 100, whereby a first secondary surface 104 of the sensor unit 100 is shown. A first load sensor 105 arranged in between the first primary surface 102 and the first secondary surface 104. Preferably, the first load sensor 105 is based on a capacitive measurement principle. An example of a structure forming such a load sensor 105 is shown in Fig. 1c, and will be detailed below. The primary surface 102 has a normal to the direction of thickness of the sensor unit 100. The secondary surface 104 has a normal to the direction of thickness of the sensor unit 100.

The sensor unit 100 comprises a first transmitter 394 for sending information (e.g. at least 11) from the first sensor unit 100. Preferably, the first transmitter 394 is configured to send data from the first sensor unit 100 by electromagnetic radiation. As detailed above, not all sensor units need to send data. However, at least one sensor unit of a system is configured to send data. Thus, the sensor unit that is configured to send data may be the second sensor unit as discussed above in connection with the method. However, herein the system is described in such a manner that the first sensor unit 100 is configured to send data. Reference is made to Figs. 10a to 10d, wherein the first sensor unit 100a transmits information I1 to the second sensor unit 100b (Figs. 10a, 10c, and 10d) or to a processor CPU (Fig. 10b).

In order to fasten the sensor unit 100 to another sensor unit, an embodiment of the sensor unit comprises a first primary fastener 111 for fastening the first sensor unit 100 to a second sensor unit 100b. As detailed in connection with the method, sensor units 100a, 100b are detachable. Therefore, the first primary fastener 111 is openable for detaching the first sensor unit (100, 100a) from the second sensor unit 100b. As detailed below, the sensor unit 100 may be fastened to the other sensor unit via a fastening member 160, 170, 180. Thus, in an embodiment, the first primary fastener 111 is suitable for fastening the first sensor unit 100 a fastening member 160, 170, 180. In this embodiment, the first primary fastener 111 is openable for detaching the first sensor unit 100, 100a from the fastening member 160, 170, 180. This applies *mutatis mutandis* to the other first fasteners 112, 113, 114 as well as the second fasteners 111b, 112b, 113b, 114b, and the third fasteners 111c, 112c, 113c, and 114c.

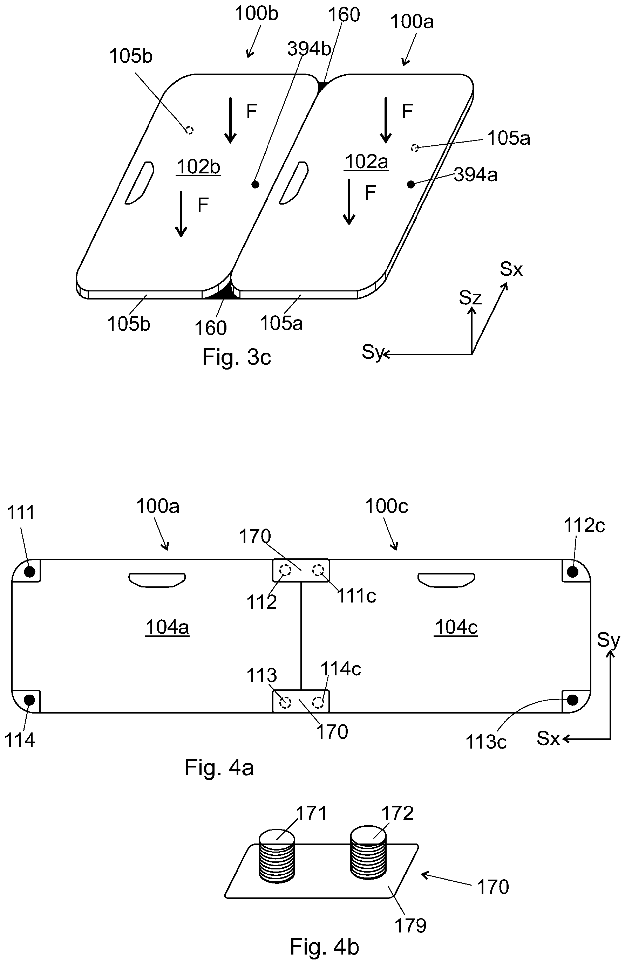

As detailed above, preferably the system comprises a second sensor unit 100b. Referring to Figs. 3a and 3c, the second sensor unit 100b comprises a second primary surface 102b, a second secondary surface 104b, and a second load sensor 105b arranged in between the second primary surface 102b and the second secondary surface 104b. To fasten the second sensor unit 100b to the first sensor unit 100a in a detachable manner, the second sensor unit comprises a second primary fastener 113b, 114b for fastening the second sensor unit 100b to the first sensor unit 100a. The second primary fastener 113b, 114b is openable for detaching the second sensor unit 100b from the first sensor unit 100a (or from a fastening member used for fastening the sensor units).

For manufacturing reasons, preferably, the second sensor unit 100b is identical to the first sensor unit 100a.

The second sensor unit 100b may comprise a display 198 (see Fig. 10c) for displaying information indicative of the load L. In the alternative or in addition, the second sensor unit 100b may comprise a second transmitter 394b for sending data from the second sensor unit 100b. Since the numbering of the sensor units is immaterial, the first sensor 100a may comprise a display or a transmitter. The data may be sent e.g. to a processor CPU (see Figs. 10a, 10b, and 10d) or to another sensor unit (see Fig. 5f).

In an embodiment, the first and the second sensor units 100a, 100b are configured such that when the first sensor unit 100a and the second sensor unit 100b are fastened to each other using the first primary fastener 111, 111a and the first secondary fastener 113b, 114b, a cross-sectional area Acs of a smallest convex space S encompassing both the first sensor unit 100a and the second sensor unit 100b is at most 10 % greater than the total cross-sectional area of the first sensor unit 100a and the second sensor unit 100b. Reference is made to Fig. 7a. As detailed above in connection with the method, the cross-sectional area Acs of the smallest convex space S encompassing both the first sensor unit 100a and the second sensor unit 100b is at least equal to the total cross-sectional area of the first sensor unit 100a and the second sensor unit 100b. When there are only two sensor units involved, the total cross-sectional area of the first sensor unit 100a and the second sensor unit 100b is the sum of the cross-sectional areas, e.g. As+As, when the sensor units are equally large. As detailed above, the area of a single sensor unit 100 is defined by its perimeter irrespective of the presence of an aperture, such as a handle 190 or a fastener 111, 112, 113, 114.

Referring to Figs. 3a to 3c and 4a and 4b, and 5a to 5c, preferably, the system comprises a first fastening member (160, 170, 180) for fastening the first sensor unit 100a to at least another sensor unit (100b, 100c, 100d) in a detachable manner. It is immaterial, which one of the fastening members 160, 170, 180 of Figs. 3b, 4b, and 5b is referred to as a first fastening member.

The first fastening member 160, 170, 180 is configured to be fastened simultaneously to the first primary fastener 111 and to the second primary fastener 113b, 114b. As for the term "simultaneously", as is evident, the first fastening member 160, 170, 180 can be fastened first to the first primary fastener 111 and thereafter to the second primary fastener 113b, 114b, whereafter the first fastening member 160, 170, 180 is simultaneously attached to both. The first fastening member 160, 170, 180 is configured to be detached from both the first primary fastener 111 and the second primary fastener 113b, 114b. While the fastening members 160 and 170 are configured to be fastened to only two fasteners, the fastening member 180 is configured to be fastened to only four fasteners. What has been said about the size of the smallest convex space applies also when the sensor units are fastened to each other using the fastening member(s) 160, 170, 180.

Preferably, the fasteners 111, 112, 113, 114 have the form of a hole, e.g. a blind hole or a through hole. Preferably, the fasteners 111, 112, 113, 114 comprise an aperture on the primary surface 102 and/or on the secondary surface 104, more preferably at least on the secondary surface 104. Figs. 1a and 1b show embodiments, wherein the fasteners 111, 112, 113, 114 are blind holes opening to (i.e. having an aperture on) the secondary surface 104. Correspondingly, the fastening member 160 of Fig. 3b comprises a first fastening element 161 configured to be arranged into a fastener (111a, 112a, 113a, 114a) of the first sensor unit 100a, and a second fastening element 162 configured to be arranged into a fastener (111b, 112b, 113b, 114b) of another sensor unit. In a similar manner, the fastening member 170 of Fig. 4b comprises a first fastening element 171 configured to be arranged into a fastener (111a, 112a, 113a, 114a) of the first sensor unit 100a, and a second fastening element 172 configured to be arranged into a fastener (111b, 112b, 113b, 114b) of another sensor unit. In a similar manner. In a similar manner, the fastening member 180 of Fig. 5b comprises a first fastening element 181 configured to be arranged into a fastener (111a, 112a, 113a, 114a) of the first sensor unit 100a, a second fastening element 182 configured to be arranged into a fastener of another sensor unit, a third fastening element 183 configured to be arranged into a fastener of another sensor unit, and a fourth fastening element 184 configured to be arranged into a fastener of another sensor unit. The fastening members 160, 170, 180 of Figs. 3b, 4b, and 5b also comprise a body part 169, 179, 189, supporting the fastening elements (161, 162, 171, 172, 181, 182, 183, 184).

In order to fasten sensor units to each other in such a manner that at most small gaps are arranged in between the sensor units 100 and all the sensor units are substantially similar (e.g. identical), preferably, the first sensor unit 100a (and preferably also the second sensor unit 100b) comprises a rectilinear edge, which is fastenable to a rectilinear edge of the second sensor unit. Thus, preferably, the first sensor unit 100a comprises a first primary corner 121 and a first secondary second corner 122 and a rectilinear first primary edge 131 extending from the first primary corner 121 to the first secondary corner 122. The corners 121, 122 may be rounded. The corners and edges are shown e.g. in Figs. 1a and 1b.

The sensor units (100a, 100b, 100c, 100d), the fasteners (112, 113, 114, 115) and, optionally, the fastening members (160, 170, 180) may be designed in such a way that some of the sensor units 100a, 100b, 100c, 100d may be turned about an axis that is normal to the primary surface (102, 102a, 102b) of the sensor unit. For example, with reference to Figs. 5d and 5e, the sensor units 100a and 10c have been turned about said axis 180 degrees compared to the arrangement of Fig. 5c as shown by the position of the handle. In a typical arrangement, the primary surfaces 102 of all the sensor units face (100a, 10b, 100c, 100d) in the same direction, most typically upwards. More precisely, some of the sensor units 100a, 100b, 100c, 100d may be turned about the axis and still the cross-sectional area Acs of the smallest convex space S encompassing all of the sensor units of the set of sensor units would be only a little greater than the cross sectional area of the separate sensor units, as detailed above.

In case the shape of the sensor units would be substantially square, the sensor unit could be turned by an integer multiple of 90 degrees about said axis. In case the shape of the sensor units would be substantially regular triangle, or substantially regular hexagon, a sensor unit could be turned by some other angle depending on the shape.

Turning of some of the sensor units this way me improve signal strength between two sensor units. For example, if a transmitter/receiver is arranged opposite to the handle 190, as in Figs. 1a and 1b, a distance between a transmitter of the third sensor unit 100c and a receiver of the first sensor unit 100a in Figs. 5d and 5e would be smaller compared to the arrangement of Fig. 5c. This may be beneficial for transmitting data between the sensor units.

As indicated in Figs. 1a and 1b, in an embodiment, the first primary fastener 111 is arranged at the first primary corner 121. As indicated in Figs. 6a and 6b, in an embodiment, the first primary fastener 111 is arranged on the first primary edge 131.

As indicated in Figs. 1a and 1b, when the first primary fastener 111 is arranged at the first primary corner 121, the first sensor unit 100a preferably comprises a first secondary fastener 112 for fastening the first sensor unit to the second sensor unit 100b, wherein the first secondary fastener 112 is arranged at the first secondary corner 122.

Even if not shown in any figure, the smallest concave space S encompassing the sensor units 100 can be made small (in the aforementioned sense) also when a shape of the sensor units is e.g. triangular or hexagonal. Thus, a sensor unit 100 need not be quadrangular. Both triagonal and hexagonal shapes have at least two corners and a rectilinear edge connecting the corners. However, a quadrangular shape, optionally with rounded corners, is preferable for handling and manufacturing reasons. More precisely, for the shape of the cross section of the sensor unit, a parallelogram is preferable, and a rectangle is even more preferable. Corners of the parallelogram or the rectangle may be rounded.

In an embodiment, a shape of a cross-section having a normal to the direction Sz of thickness of the sensor unit 100, 100a, 100b is substantially a rectangle, i.e. rectangular optionally with rounded corners, as shown e.g. in Figs. 1a, 1b, 3c, and 5c. Thus, in an embodiment, first sensor unit 100a (and preferably also the second sensor unit 100b) comprises a first tertiary corner 133 and a first quaternary corner 134. The corners (131, 132, 133, 134) need not be sharp, but can be rounded. The sensor unit (100a, 100b) also comprises a rectilinear first secondary edge 132 extending from the first secondary corner 122 to the first tertiary corner 123, the first secondary edge 132 being perpendicular to the first primary edge 131; a rectilinear first tertiary edge 133 extending from the first tertiary corner 123 to the first quaternary corner 124, the first tertiary edge 133 being parallel to the first primary edge 131; and a rectilinear first quaternary edge 134 extending from the first quaternary corner 124 to the first primary corner 121, the first quaternary edge 134 being perpendicular to the first primary edge 131.

The first sensor unit 100a may be hexagonal or have a shape of a parallelogram. In these cases, the four edges 131, 132, 133, 134 need not take the directions disclosed above. Preferably, the first sensor unit (and also the second sensor unit 100b) comprises only four corners 121, 122, 123, 124.

Referring to Figs. 5a and 1b, in an embodiment, the first primary fastener 111 is arranged at the first primary corner 121. The first sensor unit 100a comprises a first secondary fastener 112 for fastening the first sensor unit to at least the second sensor unit 100b, a first tertiary fastener 113 for fastening the first sensor unit to a third sensor unit 100c, and a first quaternary fastener 114 for fastening the first sensor unit to a further second sensor unit (not shown). In Fig. 5a, the first secondary fastener 112 is arranged at the first secondary corner 122, the first tertiary fastener 113 is arranged at the first tertiary corner 123, and the first quaternary fastener 114 is arranged at the first quaternary corner 124. Reference is made also to Fig. 1b for numbering of the corners 121, 122, 123, 124. In an embodiment, the system comprises the first sensor unit 100, the second sensor unit 100b, the third sensor unit 100c, and a fourth sensor unit 100d. The sensor units 100 of the system may be identical.

Referring to Fig. 6a, in an embodiment the first primary fastener 111 is arranged on the first primary edge 131. For the reference numerals of the corners 121, 122, 123, 124 and edges 131, 132, 133, 134, reference is made to Fig. 6b. Therein, the first sensor unit comprises a first secondary fastener 112 for fastening the first sensor unit to a third sensor unit 100c, a first tertiary fastener 113 for fastening the first sensor unit to a further sensor unit (not shown), and a first quaternary fastener 114 for fastening the first sensor unit to a another sensor unit (not shown). In the embodiment the first secondary fastener 112 is arranged on the first secondary edge 132, the first tertiary fastener 113 is arranged on the first tertiary edge 133, and the first quaternary fastener 114 is arranged on the first quaternary edge 134.

In an embodiment, the first sensor unit 100a comprises a handle 190 (see Figs. 1a and 1b). The handle 190 is for handling the first sensor unit 100a. The second sensor unit 100b preferably also comprises a handle 190. Preferably, the handle 190 is an aperture extending through the first sensor unit 100, 100a. Moreover, preferably, the handle 190 is an aperture and arranged such that an edge (e.g. 131) of the handle 190 is arranged at most 10 cm apart from the first edge 131. This enables using the aperture as a handle. A size of the handle 190 may be selected such that a hand can be pushed through the handle 190. Moreover, to have a sufficiently sturdy handle, preferably, edges of the handle 190 are arranged at least 2 mm apart from all outer edges of the sensor unit 100a, e.g. the edges 131, 132, 133, 134. Moreover, a centre of the handle 190 may be arranged at a central axis of the sensor unit 100, wherein the central axis of the sensor unit 100 is parallel to a length or a width of the sensor unit 100. In case of a rectangular sensor unit 100, the central axis of the sensor unit 100 is parallel to an edge thereof.

As depicted in Fig. 5a, when the handle 190 is arranged in such a manner, preferably the fasteners 111, 112, 113, 144 are arranged at the corners 121, 122, 123, 124. However, as indicated in Figs. 6a and 6b, the sensor unit 100 needs not to comprise a handle 190, and then the fasteners can be arranged e.g. on centres of the edges.

Referring to Figs. 5a to 5c, in an embodiment, the system comprises a second fastening member 180, wherein the second fastening member 180 is configured to be fastened to the first sensor unit 100a, the second sensor unit 100b, the third sensor unit 100c, and the fourth sensor unit 100d simultaneously. The second fastening member 180 is configured to be fastened to the sensor units 100a, 100b, 100c, 100d in a detachable manner. E.g. the second fastener 180 may be configured to be fastened to a fastener 111, 112, 113, 114 of the first sensor unit 100, 100a, a fastener of a second sensor unit 100b, a fastener of a third sensor unit 100c, and a fastener of a fourth sensor unit 100d simultaneously. Preferably, the second fastener 180 is configured to be fastened to a fastener 111, 112, 113, 114 of the first sensor unit 100, 100a, a fastener of a second sensor unit 100b that is identical to the fist sensor unit 100a, a fastener of a third sensor unit 100c that is identical to the fist sensor unit 100a, and a fastener of a fourth sensor unit 100d that is identical to the fist sensor unit 100a.

As readable from Fig. 5a, two fastening members 180 of Fig. 5b may serve are the first and the second fastening members of the system. Thus, only one type of fastening members are needed. However, in such a case, parts of the fastening members 180 would protrude from the edges of the system.

Therefore, and with reference to Figs. 3a to 3c and 4a and 4b and 5a to 5c, preferably, the first fastening member (160, 170) of the system is configured to fasten the first sensor unit 100a to only one other sensor unit (e.g. the second sensor unit 100b or a third sensor unit 100c) a detachable manner.

For example a first fastening member 160 may be configured to fasten the first sensor unit 100a only to a second sessor unit 100b that is arranged relative to the first sensor unit in a direction that is perpendicular to the first primary edge 131.

In such a case, the system may comprise a third first fastening member 170 configured to fasten the first sensor unit 100a only to a third sessor unit 100c that is arranged relative to the first sensor unit 100a in a direction that is parallel to the first primary edge 131.

The sensor units 100a, 100b, 100c may be designed such that they are identical, and that identical first 160 and third 170 fastening members can be used to fasten the sensor units.

Thus, in a preferable embodiment shown in Fig. 5a, the system only comprises two or three different types of fastening member (160, 170, 180; the fastening members 160 and 170 may be of the same type).

Referring to Figs. 6a and 6b, however, the system needs not comprise a fastening member that is configured to fasten four sensor units. Thus, even only one type of fastening members can be used (the fastening members 160 and 170 may be of the same type).

Referring to Figs. 5a and 6a, in an embodiment, the system comprises
- a primary fastening member 160, wherein the primary fastening 160 member is configured to be fastened simultaneously to the first sensor unit 100, 100a and the second sensor unit 100b and configured to be detached from both the first and second sensor units 100, 100a, 100b,
- a secondary fastening member 170, wherein the secondary fastening member is configured to be fastened simultaneously to the first sensor unit 100, 100a and the third sensor unit 100c and configured to be detached from both the first and third sensor units 100, 100a, 100c,
- a tertiary fastening member 160, wherein the tertiary fastening member is configured to be fastened simultaneously to the second sensor unit 100b and the fourth sensor unit (100d) and configured to be detached from both the second and fourth sensor units 100b, 100d, and
- a quaternary fastening member 170, wherein the quaternary fastening member is configured to be fastened simultaneously to the fourth sensor unit 100d and the third sensor unit 100c and configured to be detached from both the fourth and third sensor units 100d, 100c.

As shown in the figures, a first fastening member 160 may serve as the primary fastening member and another first fastening member 160 may serve as the tertiary fastening member. Moreover, a third fastening member 170 may serve as the secondary fastening member and another third fastening member 170 may serve as the quaternary fastening member.

Referring to Fig. 5a, the system may further comprise a quinary fastening member, and the second fastening member 180 as detailed above, may serve as the quinary fastening member.

Preferably the sensor units and the fastening members are configured such that the smallest convex space S, as discussed above, is small in the meaning discussed above. More specifically, in an embodiment, the system, i.e. the sensor units and the fastening members, are configured such that when the first, second, third, and fourth sensor units (100a, 100b, 100c, 100d) are fastened to each other using the fastening members (160, 170, and optionally 180), a cross-sectional area Acs of the smallest convex space S encompassing all of the first, the second, the third, and the fourth sensor units (100a, 100b, 100c, 100d) is at most 10 % greater than the total cross-sectional area (e.g. As+As+As+As) of the first, the second, the third, and the fourth sensor units 100a, 100b, 100c, 100d. The total cross sectional cross-sectional area of the separate sensor units 100a, 100b, 100c, 100d is the sum of the individual cross sectional areas. In case the sensor units are identical, the total cross sectional cross-sectional area of the separate sensor units 100a, 100b, 100c, 100d is As+As+As+As.

Referring to Fig. 5h, 10c, and 10d, preferably the system comprises a display 198 for displaying information indicative of the load F. The display 198 may be arranged as part of a sensor unit. However, preferably, the display 198 is not comprised by any one of the sensor units 100 that are configured to measure a part of the load F. For example, the display 198 may be arranged in connection with a processor CPU (see Fig. 5f), or the processor CPU may send the data to a display device 198 (see Figs. 5e, 5h, 10d). The display 198 may be comprised by a hand-held device, such as a mobile phone, that is separate from the processor CPU (which CPU may be comprised by a sensor unit 100). The CPU may be arranged in the hand held device having the display.

In case (a) the information I2, I3, I4 concerning parts of the load is sent to the processor CPU via the first sensor unit 100a and/or (b) the first sensor unit 100a comprises the processor CPU configured to determine the load F using at least I2, the first sensor unit 100a comprises a first receiver 396 for receiving data from a second sensor unit 100b. Reference is made to Figs. 5f, 5g, and 5h.

Preferably, a thickness Ts of the first sensor unit 100a is at most 5 cm, such as from 1 cm to 5 cm. Preferably, a thickness of the second sensor unit 100b equals the thickness of the first sensor unit 100a. Preferably, a thickness of the third sensor unit 100c equals the thickness of the first sensor unit 100a. Preferably, a thickness of the fourth sensor unit 100d equals the thickness of the first sensor unit 100a.

Preferably, a cross-sectional area As of the first sensor unit 100 is at most 1 m². The cross-sectional is defined as an area of such a cross section that has a normal to a direction Sz of the thickness Ts. The cross-sectional area equals an area of the first primary surface 102. The cross-sectional area As may be e.g. from 500 cm² to 1 m². This applies also to other sensor units of the system. On one hand this enables covering a large area with a reasonably small number of sensor units, and on the other hand this makes handling of the sensor units easy.

Even if the system is described with only one, two, or four sensor units, the number of sensor units 100 may be varied according to needs.

Preferably the load sensor 105 of the first sensor unit 100a is a capacitive load sensor. Hereinbelow a sensor unit 100 operating on the capacitive measuring principle will be detailed. It is to be understood that the sensor unit 100 can be used as the first sensor unit 100a of the system as discussed above. Moreover, another sensor unit 100 can be used as the second sensor unit 100b. Similar sensor units 100 can be used as the third, fourth and further sensor units of the system. The load sensor 105 need not be capacitive. It may be e.g. piezoelectric or piezoresistive.

Herein, a capacitive load sensor 105 is based on the principle that a capacitance (i.e. electric capacitance) between an electrode and an object (e.g. a layer) that is conductive, depends on their mutual distance. Thus, when compressible and insulating material is arranged in between the electrode and the object, the degree of compression can be determined by measuring the capacitance. Naturally, knowledge on the dependence of the capacitance on the degree of compression is needed. Moreover, the degree of compression depends on the pressure that is applied in a known manner (reference is made to generalized Hooke's law).

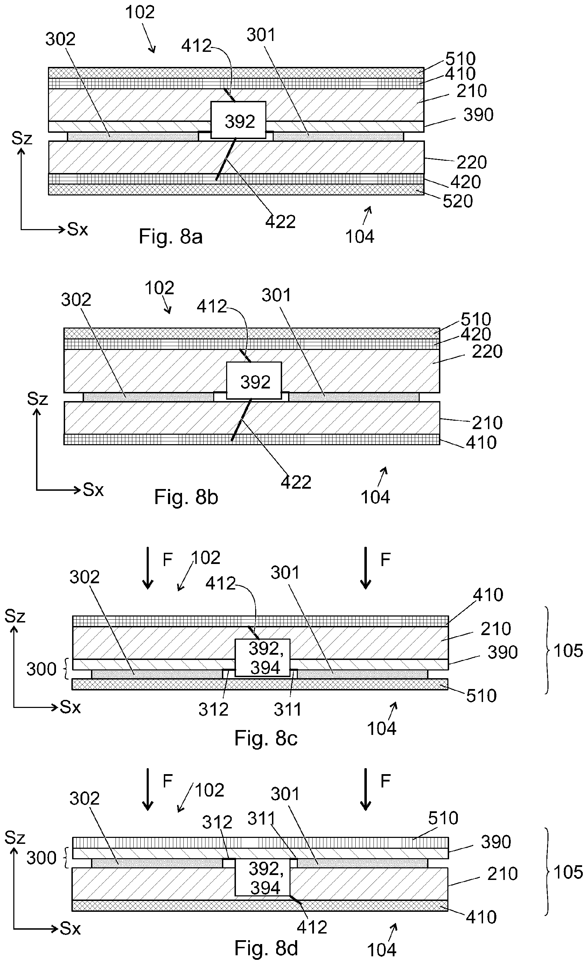

Fig. 1c shows a cross section of a sensor unit 100, the cross section having a normal that is perpendicular to the direction Sz (see Figs. 1a to 1d) of the thickness of the sensor unit 100. At least the part of the sensor unit 100 that is arranged in between the primary surface 102 and the secondary surface 104 may be referred to as the force sensor 105. In the alternative, the part of the sensor unit 100 that is arranged in between the primary cover layer 510 and the secondary cover layer 520 may be referred to as the force sensor 105, at least when the primary cover layer 510 or the secondary cover layer 520 does not form the first electrically conductive layer 410. Figs. 8c and 8d show structures, wherein an electrically conductive layer 410 forms the primary surface 102 or the secondary surface 104.

The sensor unit 100 comprises a first electrically conductive layer 410, 510, 520. The purpose of the first electrically conductive layer 410, 510, 520 is to serve as the reference electrode as discussed above. In an embodiment, the first electrically conductive layer 410, 510, 520 comprises only one electrode; or comprises electrodes that are electrically not isolatable from each other. Thus the whole first electrically conductive layer 410, 510, 520 is configured to be at one electric potential at a time. Typically the whole first electrically conductive layer 410, 510, 520 is connected to a ground potential. The first electrically conductive layer 410, 510, 520 is electrically connected to a controller 392, e.g. through a common wire 412. The term "common wire" is used to distinct from the wires 311, 312, since the common wire 412 and the first electrically conductive layer 410 form a secondary electrode commonly to a first electrode 301 and a second electrode 302.

Herein a material is considered to be electrically conducting, if (and only if) its electrical resistivity is at most 1 Ωm at a temperature of 23 °C. This concerns the first electrically conductive layer 410, 510, 520, the electrodes (e.g. 301, 302) of the set of electrodes, the wires 311, 312, the second electrically conductive layer 420, and the dummy wires 321, 322.

The sensor unit 100 comprises an electrode layer 300 comprising a set of electrodes, the set of electrodes comprising at least a first electrode 301 and a second electrode 302. The electrodes of the set of the electrodes are electrically conducting. Moreover, the sensor unit 100 comprises a first compressible and electrically insulating layer 210. The layer 210 is arranged in between the electrode layer 300 and the first electrically conductive layer 410, 510, 520.

Herein a material is considered to be electrically insulating, if (and only if) its electrical resistivity is at least 10 Ωm at a temperature of 23 °C. This concerns the first compressible and electrically insulating layer 210 and the second compressible and electrically insulating layer 220.

Herein the material of the layer 210 is considered to be compressible, when a Young's modulus of the material is less than 1 GPa and the material can be compressed by at least 10 % in a reversible manner. In particular, a layer of compressible material can be compressed by at least 10 % in a reversible manner in the direction of the thickness of the layer. The reversibility of the compression is spontaneous, i.e. elastic. Thus, a yield strain may be at least 10 per cent. Preferably, the Young's modulus of the material of the first compressive and insulating layer 210 is from 0.01 MPa to 15 MPa, such as from 0.1 MPa to 5 MPa. A Young's modulus in tension may differ from the Young's modulus in compression.

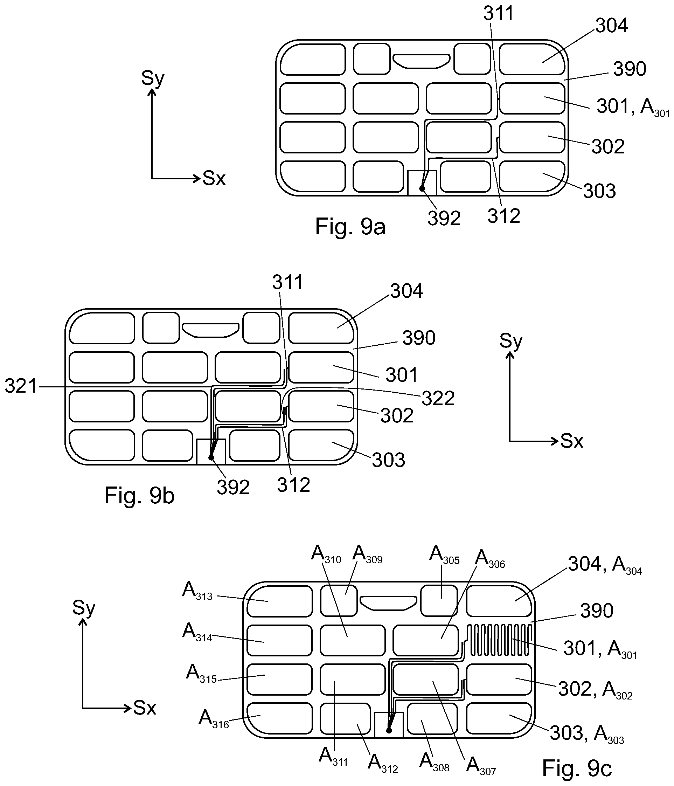

Because of the first compressible and electrically insulating layer 210, a first capacitance is formed in between the first electrode 301 and the first electrically conductive layer 410, 510, 520. The first capacitance varies by application of load as discussed above. For similar reasons, a second capacitance is formed in between the second electrode 302 and the first electrically conductive layer 410, 510, 520, wherein the second capacitance varies by application of load as discussed above. The set of electrodes comprises at least the first and the second electrodes. This has the effect that even if the load F is not uniformly distributed on the sensor unit 100, the part of the load F acting of the sensor unit 100 can be determined by determining the capacitances of the electrodes. Referring to Fig. 9a, the set of electrodes may comprise e.g. sixteen electrodes. The capacitive sensor technology has the further benefit that a number of the electrodes can be increased without significantly affecting the manufacturing costs.

To measure the capacitances of the electrodes of the set of the electrodes, the sensor unit 100 comprises a controller 392. The controller 392 is configured to determine the capacitances of the electrodes of the set of the electrodes. When the whole first electrically conductive layer 410, 510, 520 is configured to be at one electric potential at a time, the capacitances of the electrodes 301, 302 are not measured in a multiplexing manner. This enables faster measurements than solution using a multiplexing technique.

In order to measure the capacitances, the sensor unit 100 comprises a first wire 311 connecting the first electrode 301 to the controller 392 and a second wire 312 connecting the second electrode 302 to the controller 392. The wires 311, 312 are electrically conducting.

The sensor unit 100 further comprises a transmitter 394 for sending information from the sensor unit 100. The information is related to the capacitances of the electrodes (at least 301, 302) of the set of electrodes. The information may be related to a total load experienced by the sensor unit or the loads experienced by the electrodes. The content of the information and a possible recipient have also been discussed above. The transmitter 394 is preferably configured to transmit information using electromagnetic waves.

The transmitter 394 is arranged in connection with the controller 392 so that the controller 392 is able to send information (I1, I2) related to the part of the load F affecting the sensor unit 100 using the transmitter 394.

The senor unit 100 comprises a primary cover layer 510, 520 forming the primary surface 102 or the secondary surface 104. The secondary surface 104 or the primary surface, respectively, may be formed by the electrically conductive layer or a secondary cover layer 520, 510, respectively. Referring to Fig. 8c, the electrically conductive layer 410 may form the primary surface 102, and the primary cover layer 510 may form the secondary surface 104. Referring to Fig. 8d, the electrically conductive layer 410 may form the secondary surface 104, and the primary cover layer 510 may form the primary surface 102. Referring to Fig. 1c, the electrically conductive layer 410 need not form the primary surface 102 or the secondary surface 104. In such a case, the primary over layer 510 may form the primary surface 102 and a secondary cover layer 520 may form the secondary surface 104.

Referring to Fig. 1c, in an embodiment, the senor unit 100 comprises a primary cover layer 510 and a secondary cover layer 520 such that both the electrode layer 300 and the first electrically conductive layer 410 are arranged in between the primary cover layer 510 and the secondary cover layer 520. The primary cover layer 510 forms the primary surface 102. The secondary cover layer forms the secondary surface 104.

A purpose of the layer that forms the primary surface 102 is to level out the part of the load F that affects the sensor unit 100 over the entire first compressible layer 210. Therefore, a bending stiffness of the layer that forms the primary surface 102 is preferably reasonable large. This applies at least, when the primary surface 102 is configured to face upwards in use. A known, a bending stiffness in general is proportional to a Young's modulus of the material and third power of a thickness of the material. Therefore, in an embodiment, a stiffness of the layer that forms the primary surface 102 is at least 100 Nm, preferably at least 1000 Nm, wherein the stiffness equals an elastic modulus of the layer that forms the primary surface 102 multiplied by a third power of a thickness of the layer that forms the primary surface 102. For example, a 1 mm thick primary cover layer having a Youngs modulus of 100 GPa has a stiffness of 100 Nm. The greater the stiffness, the more evenly the load F is distributed over the different electrodes of the set of electrodes. The layer that forms the primary surface 102 may be the primary cover layer 510 (see Figs. 1c and 8d). In the alternative, the first electrically conductive layer 410 may the layer forming the primary surface 102 (see Fig. 8c). However, an electrically conductive layer 410, which is stiff, in the meaning discussed above, can be covered e.g. by thin paint, but the paint need not stiff. Thus, the layer forming the primary surface 102 need not be homogeneous. The layer forming the primary surface 102 and having the stiffness may be considered to extend from the primary surface 102 at most to the layer of electrodes 300 for the purpose of levelling out the load. The sensor unit 100 may comprise a marking indicative of that the primary surface 102 is configured to face upwards in use. In addition or alternatively, the primary surface 102 and the secondary surface 104 may be formed by similar materials. Moreover, the shape of the first primary fastener 111 may serve as the marking; e.g. is the first primary fastener 111 is a blind hole opening only to the secondary surface 104.

A purpose of the layer that forms the secondary surface 104 is to resist wear. Typically the sensor unit 100 is placed on a floor and most abrasion is caused to the layer that forms the secondary surface 104. A hardness of the material is related to its abrasion resistance. There are at least two different commonly accepted measures for hardness. One is the Shore hardness, which is commonly used for polymer materials. Another is the Janka hardness, which describes hardness of wooden materials. In an embodiment, a Shore hardness of the layer that forms the secondary surface 104 is at least 70 Sh(A). The unit Sh(A) refers to the Shore hardness in the "A" scale, i.e. using the "A" type durometer. In the same or another embodiment, a Janka hardness of the layer that forms the secondary surface 104 is at least 1800 N. The hardness (either one or both) may be measured from the secondary surface 104; i.e. a Shore and/or Janka hardness may be above the limits given above. The layer that forms the secondary surface 104 may be a secondary cover layer 520 (Figs. 1c, 2a, 2b, 2c). The layer that forms the secondary surface 104 may be the electrically conductive layer 410 (Fig. 8d).

A Shore hardness of the primary surface 102 may be at least 70 Sh(A). A Janka hardness of the primary surface 102 may be at least 1800 N. A stiffness of the layer forming the secondary surface 104 may be at least 100 Nm or at least 1000 Nm. In an embodiment, the layer forming the primary surface 102 comprises the same material as the layer forming the secondary surface 104. In an embodiment a thickness of the layer forming the primary surface 102 equals a thickness of the layer forming the secondary surface 104.

As for the material forming the first or the second surface 102, 104, preferably, the layer 410, 510, 520 that forms the primary surface 102 comprises at least one of wood, plastic, and metal, such as stainless steel. Preferably, the layer 410, 510, 520 that forms the secondary surface 104 comprises at least one of wood, plastic, and metal, such as stainless steel. When the layer 410, 510, 520 that forms the primary surface 102 or the secondary surface 104 comprises metal, a separate electrically conductive layer 410 is not needed. The layer may be coated, e.g. painted. When both the layers 410, 510, 520 that form the primary surfaces 102 and the secondary surface 104 comprise metal, the layers may be used as the electrically conductive layer 410 and the second electrically conductive layer 420.

In order to level out the load to each one of the electrodes of the electrode layer, in an embodiment, the layer that forms the primary surface 102 overlaps with each one of the electrodes (301, 302) of the set of electrodes in a direction Sz of thickness of the sensor unit 100. In an embodiment, the primary surface 102 encompasses normal projections of all the electrodes (301, 302) of the set of electrodes, the normal projections projected in the direction Sz of thickness of the sensor unit 100. Preferably, the layer that forms the primary surface 102 is integral to level out the load.

It has been noticed that the capacitance of an electrode (301, 302) relative to the first electrically conductive layer 410 may depend also on temperature. It is possible that the electric permeability of the material of the first compressible and insulating layer 210 depends on temperature, which could explain this phenomenon. However, to take this into account, in an embodiment, the sensor unit 100 comprises a temperature sensor 152. The temperature sensor 152 is electrically connected to the controller 392 in order for the controller to use the temperature sensor. Thus, the controller 392 is configured to use a signal receivable from the temperature sensor 152 for determining at least a capacitance of at least one of the electrodes (301, 302) of the set of the electrodes.

In the alternative, the sensor unit 100 that comprises the temperature sensor 152 may be configured to send information indicative of the temperature to the CPU, optionally via another sensor unit, and the processor CPU may be configured to use this information for determining the load. That is, the CPU may be configured to use the information receivable from the temperature sensor of the sensor unit for taking into account (i.e. compensating for) the effect of temperature on the measured value of the load F.

The signal indicative of the part of the load F as readable from a sensor unit 100 may be dependent on temperature also in case the part of the load F is not measured using the capacitive principle. For example, a signal of a sensor unit 100 indicative of the part of the load F can be formed by a piezoresistive material. Also in that case, the signal may be dependent on temperature, and the effect of temperature can be compensated by using a temperature sensor 152 (in the sensor unit 100 or arranged close to a sensor unit). The compensation may be performed e.g. in a controller of a sensor unit 100.

As an alternative to a temperature sensor of a sensor unit 100, or in addition thereto, the system may comprise a temperature sensor 152 that is separate from each one of the sensor units 100 configured to determine a part of the load L. In this case, the processor CPU may be configured to use a signal receivable from the temperature sensor for determining the load.

Referring to Fig. 1c, the electrodes (301, 302) may be arranged on base material 390. The wires 311, 312 may be arranged on the same base material. The base material 390 may be e.g. selected from a group consisting of polyimide, polyethylene naphthalate, polyethylene terephthalate, polyetheretherketone, polyurethane (such as thermoplastic polyurethane), polyethylene, poly(ethylene-vinyl acetate), polyvinyl chloride, polyborodimethylsiloxane, polystyrene, acrylonitrile-butadiene-styrene, styrene-butadienestyrene, styrene-ethylene-butylene-styrene ethylene propylene rubber, neoprene, cork, latex, natural rubber, siloxane polymer (such as silicone), and thermoplastic elastomeric gel, epoxy and phenolic resin.

However, referring to Fig. 2a the electrodes 301, 302 and the wires 311, 312 may be arranged directly onto the first compressible layer 210. Thus, in an embodiment, the electrode layer 300 is free from the base material 390. In such a case the electrode layer may comprise only the wires 311, 312 (optionally including dummy wires 321, 322) and the electrodes 301, 302.

In an embodiment, the cover layer 510 is a primary cover layer 510 forming the primary surface 102 and the sensor unit 100 comprises a secondary cover layer 520 forming the secondary surface 104. In addition, the sensor unit 100 comprises the first electrically conductive layer 410. Thus, the first electrically conductive layer 410 is arranged in between the primary cover layer 510 and the secondary cover layer 520. Then, one or both of the cover layers 510, 520 may be, but need not be, electrically conductive. Materials for these layers have been detailed above.

Some conditions for the order of the layers have been detailed above. Otherwise the order of different layers is unimportant. For example, when the electrode layer 300 does not comprise the base material 390, the electrodes 301, 302 may be arranged closer to either the primary cover layer 510 (not shown) or closer to the secondary cover layer 520, as in Fig. 2a. For example, when the electrode layer 300 comprises the base material 390, the base material 390 may be arranged in contact with the first compressible and insulating layer 210 as in Figs. 1c and 2b. However, it need not be, as in Fig. 2c. Concerning Figs. 1c and 2b, the base material 390 may be considered to form a part of the first compressible and insulating layer 210.

As for the material of the first compressible and insulating layer 210, in an embodiment the material thereof is selected from the group consisting of polyurethane (such as thermoplastic polyurethane), polyethylene, poly(ethylene-vinyl acetate), polyvinyl chloride, polyborodimethylsiloxane, polystyrene, acrylonitrile-butadiene-styrene, styrene-butadienestyrene, styrene-ethylene-butylene-styrene ethylene propylene rubber, neoprene, cork, latex, natural rubber, siloxane polymer (such as silicone), and thermoplastic elastomeric gel.

As for the material of the first electrically conductive layer 410, in an embodiment, the layer 410 comprises at least one of a metal plate, a metal foil, conductive ink, conductive paste, conductive yarns, conductive fabric, conductive polymer, a meandering electrically conductive line, multiple separate electrically conductive lines. A metal plate is suitable, at least when the layer 410 forms is used to level out the stress without an additional cover layer, i.e. the electrically conductive layer forms the primary surface (Fig. 8c). When a cover layer 510, 520 is used as the first electrically conductive layer 410, the layer 410 may comprise metal, e.g. stainless steel.

As for the material of the electrodes 301, 302, the wires 311, 312, and the dummy wires 321, 322, conductive inks or pastes, or polymers can be used. Thus, in an embodiment, the first electrode 301 and the second electrode 302 comprise [a] electrically conductive particles comprising at least one of carbon, zinc, nickel, platinum, iron, copper, silver, aluminium, and gold; or [b] the first electrode 301 and the second electrode 302 comprise electrically conductive polymer, such as polyaniline, a polyvinyl (e.g. polyvinyl alcohol or polyvinyl chloride), and/or PEDOT:PSS (i.e. poly(3,4-ethylenedioxythiophene) polystyrene sulfonate). In some electrically conductive polymers, the conductivity may be the result of electrically conductive particles as discussed above.

In an embodiment, the first wire 311 comprises the same material as the first electrode 301. In an embodiment, the second wire 312 comprises the same material as the second electrode 302.

In order to improve accuracy of the load sensor 105, in an embodiment, the sensor unit 100 comprises a second electrically conductive layer 420 and a second compressible and insulating layer 220 in between the electrode layer 300 and the second electrically conductive layer 420. A second electrically conductive common wire 422 connects the second electrically conductive layer 420 to the controller 392. Reference is made to Figs. 8a and 8b. The second electrically conductive layer 420 may form the primary surface 102 or the secondary surface 104 (see Fig. 8b). However, it need not for either of the surfaces (see Fig. 8a). What has been said about the Young modulus, yield strain, and electrical resistivity of the first compressive and insulating layer 210 applies to the second compressive and insulating layer 220. What has been said about the electrical conductivity of the first electrically conductive layer 410 applies to the second electrically conductive layer 420. A cover layer 510, 520 as shown in Figs. 1c, 2a, 2b, and 2c may serve as the second electrically conductive layer 520, provided that the layer is electrically conductive and a second compressible layer 220 is arranged as detailed above.

In this way, while a primary first capacitance of the first electrode 301 is formed relative to the first electrically conductive layer 410, a secondary first capacitance of the first electrode 301 is formed relative to the second electrically conductive layer 420.

Furthermore, preferably, these layers are arranged such that the electrode layer 300 is arranged in between the first electrically conductive layer 410 and the second electrically conductive layer 420. Thus, the two capacitances are formed on different sides of the electrode layer 300, which improves accuracy. Moreover, the structure can be used for improving the range of the sensor unit 100, e.g. when the materials of the compressible layers 210, 220 are different. For example, the first compressive layer 210 may be very soft, whereby a small load would cause large compression on the first compressive layer. However, even if the first compressive layer 210 would be completely deformed, a second compressive layer, which would not be as soft, could still be used for measuring the load and even higher loads. Therefore, in an embodiment, an elastic modulus of the first compressible and insulating layer 210 is at most one half of an elastic modulus of the second compressible and insulating layer 220.

When a cover layer 510, 520 is used as the second electrically conductive layer 420, the layer 420 may comprise metal, e.g. stainless steel. In an embodiment, the cover layer 510 is a primary cover layer 510 forming the primary surface 102 and the sensor unit 100 comprises a secondary cover layer 520 forming the secondary surface 104. In addition, the sensor unit 100 comprises the first electrically conductive layer 410 and the second electrically conductive layer 420. Thus, the first and second electrically conductive layers 420 are arranged in between the primary cover layer 510 and the secondary cover layer 520. Then, one or both of the cover layers 510, 520 may be, but need not be, electrically conductive. This ensures more freedom to material selections for the layer forming the surfaces 102 and 104, because in such a case, the cover layers 510, 520 need not be conductive.

The materials that are applicable for the first compressible and insulating layer 210 are applicable as materials for the second compressible and insulating layer 220. The materials that are applicable for the first electrically conductive layer 410 are applicable as materials for the second electrically conductive layer 420.

What has been said about the fasteners 111, 112, 113, 114 in connection with the first sensor unit 100a of the system applies to the sensor unit 100 as such. What has been said about the corners 121, 122, 123, 124 and the edges 131, 132, 133, 134 in connection with the first sensor unit 100a of the system applies to the sensor unit 100 as such. What has been said about arranging the fasteners 111, 112, 113, 114 to the corners 121, 122, 123, 124 or on the edges 131, 132, 133, 134 in connection with the first sensor unit 100a of the system applies to the sensor unit 100 as such.

Preferably, the sensor unit 100 comprises a handle 190. What has been said about the handle 190 and its location within the sensor unit (100, 100a) applies.

What has been said about of the thickness Ts of the sensor unit of the system applies. What has been said about a cross-sectional area As of the system applies. What has been said about the mass of the sensor unit of the system applies.

Preferably, the sensor unit comprises a first receiver 396 for receiving data from a second sensor unit 100b. Reasons have been discussed in connection with the method and/or the system.

As indicated above, the electrode layer 300 comprises a set of electrodes. Moreover, the more electrodes are used, the more accurately the load can be measured. Moreover, a more flexible primary cover layer 510 (or another layer forming the primary surface 102) can be applied, if the number of the electrodes is large. The set of electrodes may comprise e.g. at least six electrodes, at least eight electrodes, at least nine electrodes, at least twelve electrodes, at least fifteen electrodes, or at least sixteen electrodes. For manufacturing reasons, a number of the electrodes is preferably even (i.e. two times an integer). In such a case, the electrode layer 300 may be constituted by two halves arranged side-by-side. Figure 9a shows an electrode layer of a sensor unit 100 having sixteen electrodes. Not all of the electrodes are numbered for clarity. However, a third electrode 303 and a fourth electrode 304 have their reference numbers. Even if not shown, a wire connects each electrode to the controller 392.

Referring to Fig. 9a, the first electrode 301 is connected to the controller 392 by the first wire 311. Thus, when the controller 392 measures a capacitance of the first electrode 301, the controller implicitly measures a capacitance of a combination of the first electrode 301 and the first wire 311. While a capacitance of the wire 311 may be negligibly, alternatively it may constitute a significant part of the capacitance of the combination of the first electrode 301 and the first wire 311. The role of the wire depends on the length and width of the wire 311 as well as an area of the electrode 301. In a similar manner, the controller 392 measures a capacitance of the second electrode 302, the controller implicitly measures a capacitance of a combination of the second electrode 302 and the second wire 312, because the second electrode 302 is connected to the controller 392 by the second wire 312.

For these reasons, and with reference to Fig. 9b, in an embodiment, the sensor unit 100 comprises a first dummy wire 321. The first dummy wire 321 is connected to the controller 392, but it is not connected to the first electrode 301. The first dummy wire 321 is designed in such a way that its capacitance relative to the first electrically conductive layer 410 is substantially equal (or equal) to a capacitance of the first wire 311 relative to the first electrically conductive layer 410.

The shape of the first dummy wire 321 may be substantially similar to a shape of the first wire 311, and the first dummy wire 321 may be arranged adjacent to the first wire 311. Moreover, the area of a first dummy wire 321 is substantially equal to an area of a first wire 311. As an example, the area of a dummy wire 321 may differ from the area of the wire 311 by at most 25 %. This has the effect that the capacitance of the first dummy wire 321 is substantially the same as the capacitance of the first wire 311. Therefore, the capacitance of the wire 351 can be compensated for in the measurements. For example, the length and width of the first dummy wire 321 may be substantially equal to a length and a width, respectively, of the first wire 311. Moreover, the wires 311, 321 may be arranged side by side. Thus, when measuring the capacitance of the first electrode 301 only, the capacitance of the first dummy wire 321 can be subtracted from the total capacitance of the combination of the first electrode 301 and the first wire 311 to obtain the capacitance of only the first electrode 301. The controller 392 may be configured in such a way.

Thus, in an embodiment, the controller 392 is configured to determine a capacitance of the first electrode 301 by determining (a) a primary capacitance of a combination of the first electrode 301 and the first wire 311 and (b) a secondary capacitance of the first dummy wire 321. Moreover, the controller is configured to determine a capacitance of the first electrode only by using the primary capacitance and the secondary capacitance. The secondary capacitance may be e.g. subtracted from the primary capacitance.

What has been said about the capacitances of the first electrode 301, the first wire 311, and the first dummy wire 321 applies to all electrodes of the sensor unit. Thus, preferably, the sensor unit comprises a second dummy wire 322, which is connected to the controller 392; and the controller 392 is configured to determine a capacitance of the second electrode 302 by determining (a) a capacitance of a combination of the second electrode 302 and the second wire 312 and (b) a capacitance of the second dummy wire 322. The controller 392 may be configured to determine the capacitance of only the second electrode 302 in a similar manner as it is configured to determine the capacitance of only the first electrode 301 *mutatis mutandis.* The second dummy wire 322 is not connected to the second electrode 302. The second dummy wire 322 is designed in such a way that its capacitance relative to the first electrically conductive layer 410 is substantially equal to a capacitance of the second wire 312 relative to the first electrically conductive layer 410

As for the term electrode, an electrode (e.g. the first electrode 301) is configured to detect the changes of the internal compression in a region that is typically close to the electrode (e.g. first electrode 301), as detailed above. Such a region is herein referred to as an effective region of the electrode. An area of the effective region is referred to as an effective area.

An electrode, e.g. the first electrode 301, may be made from a foil, whereby the electrode is reasonably homogeneous. When the first electrode 301 is homogeneous over the corresponding effective region, the effective area A₃₀₁ (see e.g. Fig. 9a) from which such the electrode 301 is configured to measure compression, is equal to the physical area of the first electrode 301 itself. Herein the physical area refers to the area of the cross section of the electrode on a plane having a normal to the direction of thickness of the sensor unit 100.

However, referring to Fig. 9c, the first electrode 301 may have a shape of a meandering line. It is noted that also such an electrode is configured to detect the changes of capacitance in an area that is substantially the same as the area limited by the outer edge of the electrode. Thus, the effective area A₃₀₁ in Fig. 9c from which such an electrode 301 is configured to measure compression, is equal to the area limited by the outer edge of the first electrode 301; even if the area of the meandering line is less. Thus, an effective area A₃₀₁ of the first electrode of Fig. 9c would be substantially equal to an effective area A₃₀₁ of the first electrode of Fig. 9a. However, a physical area of the meandering line forming the electrode 301 of Fig. 9c is less than the physical area of the electrode 301 of Fig. 9a.

It has been noticed that the part of the load F affecting on the sensor unit 100 can be measured more accurately, when the electrodes of the sensor unit 100 cover a large cross section of the sensor unit 100, as opposed to the sensor unit 100 having parts not covered by electrodes. Fig. 9c shows the effective areas A₃₀₁, A₃₀₂, A₃₀₃, A₃₀₄, A₃₀₅, A₃₀₆, A₃₀₇, A₃₀₈, A₃₀₉, A₃₁₀, A₃₁₁, A₃₁₂, A₃₁₃, A₃₁₄, A₃₁₅, and A₃₁₆ of the sixteen electrodes shown in Figs. 9a to 9c. In the embodiment of Fig. 9c, the electrodes of the sensor unit 100 cover an area that equals the sum of the effective areas A₃₀₁ to A₃₁₆. As indicated in Figs. 9a to 9c, this area is large compared a cross-sectional area of the sensor unit 100. The cross-sectional area of the sensor unit 100 may be e.g. equal to the area of the base material 390 of the electrode layer 300, shown in Figs. 9a to 9c. The cross-sectional area of the sensor unit 100 may be e.g. equal to an area of the primary surface 102.

Thus, in order to accurately measure the part of the load affecting on the sensor unit 100, preferably a total effective area ∑Aᵢ, wherein i is the index of the electrode and ∑ denotes a sum, is at least 55 %, preferably at least 75 %, of the cross-sectional area As of the sensor unit 100. The cross-sectional area is defined on a cross-sectional plane having a normal to the direction Sz of the thickness of the sensor unit 100. The effective areas Aᵢ of the electrodes i have been defined above.

A function of the cover layers 510, 520 is to protect the load sensor 105, e.g. the electrode layer 300 and, in some cases, the first electrically conductive layer 410.

The following examples summarize features of the system for measuring load:
101. A system for measuring load (F), the system comprising a first sensor unit (100, 100a) comprising
   - a first primary surface (102, 102a),
   - a first secondary surface (104, 104a),
   - a first load sensor (105, 105a) arranged in between the first primary surface (102, 102a) and the first secondary surface (104, 104a),
   - a first transmitter (394, 394a) for sending data from the first sensor unit (100, 100a), and
   - a first primary fastener (111) for fastening the first sensor unit (100, 100a) to a second sensor unit (100b) or to a fastening member (160, 170, 180), wherein
   - the first primary fastener (111) is openable for detaching the first sensor unit (100, 100a) from the second sensor unit (100b) of from the fastening member (160, 170, 180).
102. The system of example 101, comprising a second sensor unit (100b) comprising
   - a second primary surface (102b),
   - a second secondary surface (104b),
   - a second load sensor (105b) arranged in between the second primary surface (102b) and the second secondary surface (104b),
   - a second transmitter (394b) for sending data from the second sensor unit (100b), and
   - a second primary fastener (113b, 114b) for fastening the second sensor unit (100b) to the first sensor unit (100, 100a) or to the fastening member (160, 170, 180), wherein
   - the second primary fastener (113b, 114b) is openable for detaching the second sensor unit (100b) from the first sensor unit (100, 100a) or from the fastening member (160, 170, 180).
103 The system of example 102, wherein the second sensor unit (100b), wherein
   - second sensor unit (100b) is identical to the first sensor unit (100, 100a).
104. The system of any of the examples 101 to 103, wherein the first (100a) or the second sensor unit (100b) comprises
   - a display (198) for displaying information indicative of the load (F).
105. The system of any of the examples 102 to 104, wherein the first and the second sensor units (100, 100a, 100b) are configured such that when the first (100, 100a) and the second (100b) sensor units are fastened to each other using the first primary fastener (111, 111a) and the first secondary fastener (113b, 114b), a cross-sectional area (Acs) of a smallest convex space (S) encompassing both the first (100, 100a) and the second (100b) sensor units is at most 10 % greater than the total cross-sectional area (As+As) of the first (100, 100a) and the second (100b) sensor units.
106. The system of any of the examples 101 to 105, wherein
   - the first primary fastener (111) is a blind hole or a through hole opening to the first primary surface (102) and/or to the first secondary surface (104); preferably
   - the first primary fastener (111) is a blind hole or a through hole opening at least to the first secondary surface (104).
107. The system of any of the examples 101 to 106, comprising a first fastening member (160, 170, 180), wherein
   - the first fastening member (160, 170, 180) is configured to be fastened simultaneously to the first primary fastener (111) and to the second primary fastener (113b, 114b) and configured to be detached from both the first primary fastener (111) and the second primary fastener (113b, 114b).
108. The system of any of the examples 101 to 107, wherein
   - the first primary fastener (111) comprises a blind hole or a through hole opening to the first primary surface (102) and/or on the first secondary surface (104), the system comprising
   - a first fastening member (160, 170, 180) comprising
   - a fastening element (161, 162, 171, 172, 181, 182, 183, 184) configured to be arranged in the hole of the first primary fastener (111).
109. The system of any of the examples 101 to 108, wherein
   - the first sensor unit comprises a first primary corner (121) and a first secondary second corner (122) and a rectilinear first primary edge (131) extending from the first primary corner (121) to the first secondary corner (122), and
   - the first primary fastener (111) is arranged at the first primary corner (121) or on the first primary edge (131).
110. The system of the example 109, wherein
   - the first primary fastener (111) is arranged at the first primary corner (121), the system comprising
   - a first secondary fastener (112) for fastening the first sensor unit to the second sensor unit (100b), wherein
   - a first secondary fastener (112) is arranged at the first secondary corner (122); preferably,
   - the first secondary fastener (112) is a blind hole or a through hole opening to the primary surface (102) and/or to the secondary surface (104);
      more preferably,
   - the first secondary fastener (112) is a blind hole or a through hole opening at least to the secondary surface (104).
111. The system of the example 109 or 110, wherein the first sensor unit comprises
   - a first tertiary corner (133),
   - a first quaternary corner (134),
   - a rectilinear first secondary edge (132) extending from the first secondary corner (122) to the first tertiary corner (123),
   - a rectilinear first tertiary edge (133) extending from the first tertiary corner (123) to the first quaternary corner (124), and
   - a rectilinear first quaternary edge (134) extending from the first quaternary corner (124) to the first primary corner (121);
      preferably,
   - the first tertiary edge (133) is parallel to the first primary edge (131),
      more preferably,
   - the first secondary edge (132) is perpendicular to the first primary edge (131), and
   - the first quaternary edge (134) is perpendicular to the first primary edge (131).
112. The system of the example 111, wherein
   - the first primary fastener (111) is arranged at the first primary corner (121), the first sensor unit (100a) comprising
   - a first secondary fastener (112) for fastening the first sensor unit to at least the second sensor unit (100b),
   - a first tertiary fastener (113) for fastening the first sensor unit to a third sensor unit (100c), and
   - a first quaternary fastener (114) for fastening the first sensor unit to a further second sensor unit, wherein
   - the first secondary fastener (112) is arranged at the first secondary corner (122), - the first tertiary fastener (113) is arranged at the first tertiary corner (123) and
   - the first quaternary fastener (114) is arranged at the first quaternary corner (124).
113. The system of the example 111, wherein
   - the first primary fastener (111) is arranged on the first primary edge (131), the first sensor unit (100a) comprising
   - a first secondary fastener (112) for fastening the first sensor unit to a third sensor unit (100c),
   - a first tertiary fastener (113) for fastening the first sensor unit to a further sensor unit, and
   - a first quaternary fastener (114) for fastening the first sensor unit to a another sensor unit, wherein
   - the first secondary fastener (112) is arranged on the first secondary edge (132),
   - the first tertiary fastener (113) is arranged on the first tertiary edge (133) and
   - the first quaternary fastener (114) is arranged on the first quaternary edge (134).
114. The sensor unit (100) of the example 112 or 113, wherein
   - the first tertiary fastener (113) is a blind hole or a through hole opening to the primary surface (102) and/or to the secondary surface (104) and
   - the first quaternary fastener (114) is a blind hole or a through hole opening to the primary surface (102) and/or to the secondary surface (104);
      more preferably
   - the first tertiary fastener (113) is a blind hole or a through hole opening at least to the secondary surface (104) and
   - the first quaternary fastener (114) is a blind hole or a through hole opening at least to the secondary surface (104).
115. The system of any of the examples 101 to 114, wherein the first sensor unit comprises
   - a handle (190) for handling the first sensor unit (100, 100a);
      preferably,
   - the handle (190) is an aperture extending through the first sensor unit (100, 100a).
116. The system of any the examples 101 to 115, comprising
   - the second sensor unit (100b),
   - the third sensor unit (100c),
   - the fourth sensor unit (100d).
117. The system of any of the examples 101 to 116, comprising
   - a second fastening member (180), wherein the second fastening member is configured to be fastened simultaneously to
   - a fastener (111, 112, 113, 114) of the first sensor unit (100, 100a),
   - a fastener of a second sensor unit (100b),
   - a fastener of a third sensor unit (100c), and
   - a fastener of a fourth sensor unit (100d);
      preferably, the second fastening member (180) is configured to be fastened to
   - a fastener of the first sensor unit,
   - a fastener of a second sensor unit that is identical the first sensor unit,
   - a fastener of a third sensor unit that is identical the first sensor unit, and
   - a fastener of a fourth sensor unit that is identical the first sensor unit.
118. The system of the example 117, wherein
   - the second fastening member (180) comprises fastening elements (181, 182, 183, 184), of which one fastening element (181) is configured to be arranged to a blind hole or a through hole of the first primary fastener (111), and another fastening element (182, 183, 184) is configured to be arranged to a blind hole or a through hole of a fastener of another senor unit.
119. The system of the examples 101 to 118, comprising
   - a primary fastening member configured to be fastened simultaneously to the first sensor unit (100, 100a) and the second sensor unit (100b) and configured to be detached from both the first and second sensor units (100, 100a, 100b),
   - a secondary fastening member configured to be fastened simultaneously to the first sensor unit (100, 100a) and the third sensor unit (100c) and configured to be detached from both the first and third sensor units (100, 100a, 100c),
   - a tertiary fastening member configured to be fastened simultaneously to the second sensor unit (100b) and the fourth sensor unit (100d) and configured to be detached from both the second and fourth sensor units (100b, 100d), and
   - a quaternary fastening member configured to be fastened simultaneously to the fourth sensor unit (100d) and the third sensor unit (100c) and configured to be detached from both the fourth and third sensor units (100d, 100c).
120. The system of the example 119, comprising
   - quinary fastening member configured to be fastened simultaneously to the first, second, third, and fourth sensor units (100a, 100b, 100c, 100d) and configured to be detached from these sensor units.
121. The system of any of the examples 116 to 120, configured such that when the first, second, third, and fourth sensor units (100a, 100b, 100c, 100d) are fastened to each other using the fastening members, a cross-sectional area (Acs) of a smallest convex space (S) encompassing all of the first, the second, the third, and the fourth sensor units (100a, 100b, 100c, 100d) is at most 10% greater than the total cross-sectional area (As+As+As+As) of the first, the second, the third, and the fourth sensor units (100a, 100b, 100c, 100d).
122. The system of any of the examples 101 to 121 comprising
   - a display (198) for displaying information indicative of the load (F).
123. The system of any of the examples 101 to 122, wherein
   - a thickness of the first sensor unit (100, 100a) is at most 5 cm and,
   - an area (As) of the first primary surface (102) is at most 1 m².
124. The system of any of the examples 101 to 123, wherein the first sensor unit or the second sensor unit comprises
   - a first receiver (396) for receiving data from a second sensor unit (100b) or the first sensor unit (100a), respectively.
125. The system of any of the examples 101 to 124, comprising
   - a processor (CPU) that is configured to determine the load (F) using information receivable from the first sensor unit (100a);
      preferably,
   - the processor (CPU) that is configured to determine the load (F) using information receivable from the first sensor unit (100a) and the second sensor unit (100b).
126. The system of any of the examples 101 to 125, comprising
   - a temperature sensor (152) for the purpose of compensating for the effect of temperature on a measurable value of the load (F);
      preferably,
   - a controller of the first sensor unit (100a) is configured to use a signal receivable from the temperature sensor (152) for determining the data sent from the first sensor unit (100, 100a) and/or
   - a processor (CPU) of the system is configured to use a signal receivable from the temperature sensor (152) for determining the load (F).
127. The system of any of the examples 101 to 126, wherein the first load sensor (105, 105a) comprises
   - a first electrically conductive layer (410),
   - an electrode layer (300) comprising a set of electrodes, the set of electrodes comprising at least a first electrode (301) and a second electrode (302),
   - a first compressible and electrically insulating layer (210) in between the electrode layer (300) and the first electrically conductive layer (410),
   - a controller (392) configured to determine a capacitance of each one of the electrodes of the set of the electrodes,
   - a first wire (311) connecting the first electrode (301) to the controller (392),
   - a second wire (312) connecting the second electrode (302) to the controller (392), and
   - a common wire (412) connecting the first electrically conductive layer (410) to the controller (392), wherein
   - the first transmitter (394, 394a) is arranged in connection with the controller (392).
128. The system of any of the examples 101 to 127, wherein the first sensor unit (100, 100a) is a sensor unit according to any one of the examples 301 to 334.
129. The system of any of the examples 102 to 128, wherein the second sensor unit (100b) is a sensor unit according to any one of the examples 301 to 334.

The following examples summarize features of a method for measuring load:
201. A method for measuring a load (F) that is distributed on a primary area (Af), the method comprising
   - arranging available a set of sensor units (100, 100a, 100b, 100c, 100d), the set of sensor units comprising at least a first sensor unit (100a) and a second sensor unit (100b),
   - arranging the sensor units of the set of sensor units such that
      - a first part of the load (F) affects the first sensor unit (100a),
      - a second part of the load (F) affects the second sensor unit (100b),
      - the set of sensor units cover the whole primary area (Af),
   - determining, using the first sensor unit (100a), first information (11) indicative of a first part of the load (F),
   - determining, using the second sensor unit (100b), second information (12) indicative of the second part of the load (F),
   - transmitting the second information (12) and receiving the second information (12), and
   - determining the load using (F) the first information (11) and the second information (12).
202. The method of example 201, wherein
   - the set of sensor units further comprises a third sensor unit (100c) and a fourth sensor unit (100d), the method comprising
   - arranging the sensor units of the set of sensor units such that
      - a third part of the load affects the third sensor unit (100c),
      - a fourth part of the load affects the fourth sensor unit (100d),
   - determining, using the third sensor unit (100c), third information (13) indicative of a third part of the load (F),
   - determining, using the fourth sensor unit (100d), fourth information (14) indicative of the fourth part of the load (F),
   - transmitting and receiving the third information (13),
   - transmitting and receiving the fourth information (14), and
   - determining the load (F) using also the third information (13) and the fourth information (14).
203. The method of example 201 or 202, wherein the sensor units are arranged such that
   - a plane that has a normal to a direction of the thickness of the first sensor unit (100a) intersects all the sensor units of the set of sensor units.
204. The method of any of the examples 201 to 203, comprising
   - fixing each sensor unit of the set of sensor units to at least one other sensor unit of the set of sensor units.
205. The method of example 204, comprising
   - fixing the sensor units of the set of sensor units such that a cross-sectional area (Acs) of a smallest convex space encompassing all of the sensor units of the set of sensor units is at most 10 % greater than the total cross-sectional area of the sensor units, when separate from each other.
206. The method of any of the examples 201 to 205, comprising
   - detaching the sensor units of the set of sensor units from each other and/or from the fastening members (160, 170, 180).
207. The method of any of the examples 201 to 206, comprising
   - transmitting and receiving the first information (I1).
208. The method of any of the examples 201 to 207, comprising
   - transmitting and receiving information indicative of the load (F).
209. The method of any of the examples 201 to 208, wherein
   - the first sensor unit forms at least a part of the system of any of the examples 101 to 129.
210. The method of any of the examples 201 to 209, wherein
   - the first sensor unit is a sensor unit according to any one of the examples 301 to 334.
211. The method of any of the examples 201 to 210, wherein
   - the second sensor unit is a sensor unit according to any one of the examples 301 to 334.
213. The method of any of the examples 202 to 211, wherein
   - the third sensor unit is a sensor unit according to any one of the examples 301 to 334.
214. The method of any of the examples 202 to 211, wherein
   - the fourth sensor unit is a sensor unit according to any one of the examples 301 to 334.

The following examples summarize features of the sensor unit for measuring load:
301. A sensor unit (100), comprising
   - a primary surface (102),
   - a secondary surface (104),
   - a first electrically conductive layer (410),
   - an electrode layer (300) comprising a set of electrodes, the set of electrodes comprising at least a first electrode (301) and a second electrode (302),
   - a first compressible and electrically insulating layer (210) in between the electrode layer (300) and the first electrically conductive layer (410),
   - a controller (392) configured to determine a capacitance of each one of the electrodes of the set of the electrodes,
   - a first wire (311) connecting the first electrode (301) to the controller (392),
   - a second wire (312) connecting the second electrode (302) to the controller (392),
   - a common wire (412) connecting the first electrically conductive layer (410) to the controller (392),
   - a transmitter (394) configured to send information related to the capacitances of the electrodes (301, 302), and
   - a cover layer (510, 520) forming the primary surface (102) or the secondary surface (104), wherein
   - the electrode layer (300) and the a first compressible and electrically insulating layer (210) are arranged between the cover layer (510, 520) and the first electrically conductive layer (410),
   - a stiffness of a layer (410, 510, 520) that forms the primary surface (102) is at least 100 Nm, wherein the stiffness equals an elastic modulus of the layer (410, 510, 520) that forms the primary surface (102) multiplied by a third power of a thickness of the layer (410, 510, 520) that forms the primary surface (102), and
   - a Shore hardness of the layer (410, 510, 520) that forms the secondary surface (104) is at least 70 Sh(A) and/or a Janka hardness of the layer (410, 510, 520) that forms the secondary surface (104) is at least 1800 N.
302. The sensor unit (100) of example 301, wherein
   - the cover layer (510) is a primary cover layer (510) forming the primary surface (102), the sensor unit (100) comprising
   - a secondary cover layer (520), wherein
   - the secondary cover layer (520) is the layer that forms the secondary surface (104) and
   - the first electrically conductive layer (410) is arranged in between the primary cover layer (510) and the secondary cover layer (520).
303. The sensor unit (100) of example 301 or 302, wherein
   - the whole first electrically conductive layer (410, 510, 520) is configured to be at one electric potential at a time.
304. The sensor unit (100) of any of the examples 301 to 303, wherein
   - a stiffness of the layer (410, 510, 520) that forms the secondary surface (104) is at least 100 Nm, wherein the stiffness equals an elastic modulus of the layer (410, 510, 520) that forms the secondary surface (104) multiplied by a third power of a thickness of the layer (410, 510, 520) that forms the secondary surface (104), and
   - a Shore hardness of the layer (410, 510, 520) that forms the primary surface (102) is at least 70 ShA and/or a Janka hardness of the layer (410, 510, 520) that forms the primary surface (102) is at least 1800 N.
305. The sensor unit (100) of any of the examples 301 to 304, comprising
   - a second electrically conductive layer (420, 510, 520) and
   - a second compressible layer (220) in between the electrode layer (300) and the second electrically conductive layer (420, 510, 520).
306. The sensor unit (100) of any of the example 305, wherein
   - the second electrically conductive layer (420) is arranged in between a primary cover layer (510) and a secondary cover layer (520).
307. The sensor unit (100) of the example 305 or 306, wherein
   - an elastic modulus of the first compressible and insulating layer (210) is at most one half of an elastic modulus of the second compressible and insulating layer (220).
308. The sensor unit (100) of any of the examples 301 to 307, wherein
   - the layer that forms the primary surface (102) overlaps with each one of the electrodes (301, 302) of the set of electrodes in a direction (Sz) of thickness of the sensor unit (100);
      preferably,
   - the layer that forms the primary surface (102) is integral.
309. The sensor unit (100) of any of the examples 301 to 308, comprising
   - a temperature sensor (152) that is connected to the controller (392), wherein
   - the controller (392) is configured to use a signal receivable from the temperature sensor (152) for determining at least a capacitance of at least one of the electrodes (301, 302) of the set of the electrodes.
310. The sensor unit (100) of any of the examples 301 to 309, comprising
   - a first dummy wire (321) connected to the controller (392), wherein
   - the controller (392) is configured to determine a capacitance of the first electrode (301) by determining (a) a capacitance of a combination of the first electrode (301) and the first wire (311) and (b) a capacitance of the first dummy wire (321);
      preferably, the sensor unit (100) comprises
   - a second dummy wire (322) connected to the controller (392), wherein
   - the controller (392) is configured to determine a capacitance of the second electrode (302) by determining (a) a capacitance of a combination of the second electrode (302) and the second wire (312) and (b) a capacitance of the second dummy wire (322).
311. The sensor unit (100) of any of the examples 301 to 310, comprising
   - a first primary fastener (111) for fastening the sensor unit (100) to a second sensor unit (100b), wherein
   - the first primary fastener (111) is openable for detaching the sensor unit (100) from the second sensor unit (100b) or from the fastening member (160, 170, 180);
      preferably,
   - the first primary fastener (111) is a blind hole or a through hole opening to the primary surface (102) and/or on the secondary surface (104);
      more preferably
   - the first primary fastener (111) is a blind hole or a through hole opening at least to the secondary surface (104).
312. The sensor unit (100) of any of the examples 301 to 311, wherein
   - the sensor unit comprises a first primary corner (121) and a first secondary second corner (122) and a rectilinear first primary edge (131) extending from the first primary corner (121) to the first secondary corner (122), and
   - the first primary fastener (111) is arranged at the first primary corner (121) or on the rectilinear first primary edge (131).
313. The sensor unit (100) of the example 312, wherein
   - the first primary fastener (111) is arranged at the first primary corner (121), the sensor unit (100) comprising
   - a first secondary fastener (112) for fastening the first sensor unit (100) to at least the second sensor unit (100b), wherein
   - a first secondary fastener (112) is arranged at the first secondary corner (122).
314. The sensor unit (100) of example 312 or 313, comprising
   - a first tertiary corner (123),
   - a first quaternary corner (124),
   - a rectilinear first secondary edge (132) extending from the first secondary corner (122) to the first tertiary corner (123),
   - a rectilinear first tertiary edge (133) extending from the first tertiary corner (123) to the first quaternary corner (124), and
   - a rectilinear first quaternary edge (134) extending from the first quaternary corner (124) to the first primary corner (121);
      preferably,
   - the first tertiary edge (133) is parallel to the first primary edge (131),
      more preferably,
   - the first secondary edge (132) is perpendicular to the first primary edge (131), and
   - the first quaternary edge (134) is perpendicular to the first primary edge (131).
315. The sensor unit (100) of the example 314, wherein
   - the first primary fastener (111) is arranged at the first primary corner (121), the sensor unit (100) comprising
   - a first secondary fastener (112) for fastening the first sensor unit (100) to at least the second sensor unit (100b),
   - a first tertiary fastener (113) for fastening the first sensor unit (100) to a third sensor unit (100c), and
   - a first quaternary fastener (114) for fastening the first sensor unit to further second sensor unit (100c), wherein
   - the first secondary fastener (112) is arranged at the first secondary corner (122),
   - the first tertiary fastener (113) is arranged at the first tertiary corner (123), and
   - the first quaternary fastener (114) is arranged at the first quaternary corner (124).
316. The sensor unit (100) of the example 314, wherein
   - the first primary fastener (111) is arranged on the first primary edge (131), the sensor unit (100) comprising
   - a first secondary fastener (112) for fastening the first sensor unit (100) to a third sensor unit (100b),
   - a first tertiary fastener (113) for fastening the first sensor unit (100) to a further sensor unit, and
   - a first quaternary fastener (114) for fastening the first sensor unit to another further sensor unit, wherein
   - the first secondary fastener (112) is arranged on the first secondary edge (132),
   - the first tertiary fastener (113) is arranged on the first tertiary edge (133), and
   - the first quaternary fastener (114) is arranged on the first quaternary edge (134).
317. The sensor unit (100) of the example 315 or 316, wherein
   - the first tertiary fastener (113) is a blind hole or a through hole opening to the primary surface (102) and/or to the secondary surface (104) and
   - the first quaternary fastener (114) is a blind hole or a through hole opening to the primary surface (102) and/or to the secondary surface (104);
      more preferably
   - the first tertiary fastener (113) is a blind hole or a through hole opening at least to the secondary surface (104) and
   - the first quaternary fastener (114) is a blind hole or a through hole opening at least to the secondary surface (104).
318. The sensor unit (100) of any of the examples 301 to 317, comprising
   - a handle (190) for handling the sensor unit (100);
      preferably,
   - the handle (190) is an aperture extending through the sensor unit (100).
319. The sensor unit (100) of any of the examples 301 to 318, wherein
   - a thickness (Ts) of the sensor unit (100) is at most 5 cm and
   - a cross-sectional area (As) of the sensor unit (100), the cross-section having a normal that is parallel to a direction of the thickness (Ts) of the sensor unit (100), is at most 1 m².
320. The sensor unit (100) of any of the examples 301 to 319, comprising
   - a first receiver (396) for receiving data from a second sensor unit (100b).
321. The sensor unit (100) of any of the examples 301 to 320, wherein
   - the set of electrodes comprises at least six electrodes, at least eight electrodes, at least nine electrodes, at least twelve electrodes, at least fifteen electrodes, or at least sixteen electrodes;
      preferably,
   - a number of the electrodes in the set of electrodes is even.
322. The sensor unit (100) of any of the examples 301 to 321, wherein
   - the total effective area (∑Aᵢ) of the electrodes of the set of electrodes (301, 302, 303, 304, i) is at least 55 % of the total cross-sectional area (As) of the sensor unit (100).
323. The sensor unit (100) of any of the examples 301 to 323, comprising
   - a seal (199) that at least partly laterally encircles the electrode layer (300) such that an angle of view (α) of the seal (199), as seen from a centre of the electrode layer (300), is at least 270 degrees.
324. The sensor unit (100) of any of the examples 301 to 323, wherein
   - the layer (410, 510, 520) that forms the primary surface (102) comprises at least one of wood, plastic and metal, such as stainless steel, and
   - a thickness of the layer (410, 510, 520) that forms the primary surface (102) is from 1 mm to 30 mm.
325. The sensor unit (100) of any of the examples 301 to 324, wherein
   - the layer (410, 510, 520) that forms the secondary surface (104) comprises at least one of wood, plastic, and metal, such as stainless steel, and
   - a thickness of the layer (410, 510, 520) that forms the secondary surface (104) is from 1 mm to 30 mm.
326. The sensor unit (100) of any of the examples 301 to 325, wherein the electrode layer (300) comprises (a) only the electrodes (301, 302, 303) and the wires (311, 321, 312, 322) or (b) base material (390) on which the electrodes (301, 302, 303) are arranged, and the base material is selected from a group consisting of polyimide, polyethylene naphthalate, polyethylene terephthalate, polyetheretherketone, polyurethane (such as thermoplastic polyurethane), polyethylene, poly(ethylene-vinyl acetate), polyvinyl chloride, polyborodimethylsiloxane, polystyrene, acrylonitrile-butadiene-styrene, styrene-butadienestyrene, styrene-ethylene-butylene-styrene ethylene propylene rubber, neoprene, cork, latex, natural rubber, siloxane polymer (such as silicone), and thermoplastic elastomeric gel, epoxy and phenolic resin.
327. The sensor unit (100) of any of the examples 301 to 326, wherein the first compressible layer (210) comprises material selected from the group consisting of polyurethane (such as thermoplastic polyurethane), polyethylene, poly(ethylene-vinyl acetate), polyvinyl chloride, polyborodimethylsiloxane, polystyrene, acrylonitrile-butadiene-styrene, styrene-butadienestyrene, styrene-ethylene-butylene-styrene ethylene propylene rubber, neoprene, cork, latex, natural rubber, siloxane polymer (such as silicone), and thermoplastic elastomeric gel.
328. The sensor unit (100) of any of the examples 305 to 327, wherein the second compressible layer (220) comprises material selected from the group consisting of polyurethane (such as thermoplastic polyurethane), polyethylene, poly(ethylene-vinyl acetate), polyvinyl chloride, polyborodimethylsiloxane, polystyrene, acrylonitrile-butadiene-styrene, styrene-butadienestyrene, styrene-ethylene-butylene-styrene ethylene propylene rubber, neoprene, cork, latex, natural rubber, siloxane polymer (such as silicone), and thermoplastic elastomeric gel.
329. The sensor unit (100) of any of the examples 301 to 328, wherein the first electrically conductive layer (410) comprises at least one of a metal foil, conductive ink, conductive paste, conductive yarns, conductive fabric, conductive polymer, a meandering electrically conductive line, multiple separate electrically conductive lines.
330. The sensor unit (100) of any of the examples 305 to 329, wherein the second electrically conductive layer (420) comprises at least one of a metal foil, conductive ink, conductive paste, conductive yarns, conductive fabric, conductive polymer, a meandering electrically conductive line, multiple separate electrically conductive lines.
331. The sensor unit of any of the examples 301 to 330, wherein the first electrode (301) comprises
   - electrically conductive particles comprising at least one of carbon, zinc, nickel, platinum, iron, copper, silver, aluminium, and gold; or
   - electrically conductive polymer, such as polyaniline, a polyvinyl (e.g. polyvinyl alcohol or polyvinyl chloride), and/or PEDOT:PSS (i.e. poly(3,4-ethylenedioxythiophene) polystyrene sulfonate).
332. The sensor unit (100) of any of the examples 301 to 331, wherein
   - the layer (410, 510, 520) that forms the primary surface (102) extends from the primary surface (102) at most to the electrode layer (300).
333. The sensor unit (100) of any of the examples 301 to 332, wherein
   - the layer (410, 510, 520) that forms the secondary surface (104) extends from the secondary surface (104) at most to the electrode layer (300).
334. The sensor unit (100) of any of the examples 301 to 333, wherein
   - the stiffness of a layer (410, 510, 520) that forms the primary surface (102) is at least 1000 Nm.

## Claims

1. A system for measuring load (F), the system comprising
- a first sensor unit (100, 100a) comprising
• a first primary surface (102, 102a),
• a first secondary surface (104, 04a),
• a first load sensor (105, 105a) arranged in between the first primary surface (102, 102a) and the first secondary surface (104, 104a),
• a first transmitter (394a) for sending data from the first sensor unit (100, 100a), and
• a first primary fastener (111) for fastening the first sensor unit (100, 100a) to a second sensor unit (100b) or to a fastening member (160, 170, 180), wherein
• the first primary fastener (111) is openable for detaching the first sensor unit (100, 100a) from the second sensor unit (100b) of from the fastening member (160, 170, 180), the system comprising
- the second sensor unit (100b) comprising
• a second primary surface (102b),
• a second secondary surface (104b),
• a second load sensor (105b) arranged in between the second primary surface (102b) and the second secondary surface (104b), and
• a second primary fastener (113b, 114b) for fastening the second sensor unit (100b) to the first sensor unit (100a) or to the fastening member (160, 170, 180), wherein
• the second primary fastener (113b, 114b) is openable for detaching the second sensor unit (100b) from the first sensor unit (100,100a) or from the fastening member (160, 170, 180).

2. The system of claim 1, wherein the first and the second sensor units (100a, 100b) are configured such that when the first (100a) and the second (100b) sensor units are fastened to each other using the first primary fastener (111) and the first secondary fastener (113b, 114b), a cross-sectional area (Acs) of a smallest convex space (S) encompassing both the first (100a) and the second (100b) sensor units is at most 10 % greater than the total cross-sectional area of the first (100a) and the second (100b) sensor units.

3. The system of claim 1 or 2, comprising
- the first fastening member (160, 170, 180), wherein
- the first fastening member (160, 170, 180) is configured to be fastened simultaneously to the first primary fastener (111) and to the second primary fastener (113b, 114b) and configured to be detached from both the first primary fastener (111) and the second primary fastener (113b, 114b).

4. The system of claim 3, wherein
- the first primary fastener (111) comprises a blind hole or a through hole opening to the first primary surface (102a) and/or to the first secondary surface (104a) and
- the first fastening member (160, 170, 180) comprises a fastening element (161, 162, 171, 172, 181, 182, 183, 184) configured to be arranged in the hole of the first primary fastener (111);
preferably,
- the first primary fastener (111) is a blind hole or a through hole opening at least to the first secondary surface (104a);
more preferably,
- the second primary fastener (113b, 114b) comprises a blind hole or a through hole opening to the second primary surface (102b) and/or to the second secondary surface (104b) and
- the first fastening member (160, 170, 180) comprises another fastening element (161, 162, 171, 172, 181, 182, 183, 184) configured to be arranged in the hole of the second primary fastener (113b, 114b).

5. The system of any of the claims 1 to 4 wherein
- the first sensor unit (100a) comprises a first primary corner (121), a first secondary second corner (122), and a rectilinear first primary edge (131) extending from the first primary corner (121) to the first secondary corner (122), and
- the first primary fastener (111) is arranged at the first primary corner (121) or on the first primary edge (131).

6. The system of the claim 5, wherein
- the first primary fastener (111) is arranged at the first primary corner (121), the system comprising
- a first secondary fastener (112) arranged at the first secondary corner (122) for fastening the first sensor unit to the second sensor unit (100b) or to a fastening member (160, 170, 180);
preferably,
- the first secondary fastener (112) is a blind hole or a through hole opening to the first primary surface (102a) and/or to the first secondary surface (104a);
more preferably,
- the first secondary fastener (112) is a blind hole or a through hole opening at least to the first secondary surface (104a).

7. The system of any of the claims 1 to 6, comprising
- a temperature sensor (152) for the purpose of compensating for the effect of temperature on a measurable value of the load (F);
preferably,
- a controller of the first sensor unit (100, 100a) is configured to use a signal receivable from the temperature sensor (152) for determining the data sent from the first sensor unit (100, 100a) and/or
- a processor (CPU) of the system is configured to use a signal receivable from the temperature sensor (152) for determining the load (F).

8. The system of any of the claims 1 to 7, wherein the first sensor unit (100, 100a) comprises
- a handle (190) for handling the first sensor unit (100, 100a);
preferably,
- the handle (190) is an aperture extending through the first sensor unit (100, 100a).

9. The system of any of the claims 1 to 8, wherein
- a thickness of the first sensor unit (100, 100a) is at most 5 cm and
- an area (As) of the first primary surface (102) is at most 1 m².

10. The system of any of the claims 1 to 9, wherein the first sensor unit (100, 100a) comprises
- a first electrically conductive layer (410),
- an electrode layer (300) comprising a set of electrodes, the set of electrodes comprising at least a first electrode (301) and a second electrode (302),
- a first compressible and electrically insulating layer (210) in between the electrode layer (300) and the first electrically conductive layer (410),
- a controller (392) configured to determine a capacitance of each one of the electrodes of the set of the electrodes,
- a first wire (311) connecting the first electrode (301) to the controller (392),
- a second wire (312) connecting the second electrode (302) to the controller (392), and
- a common wire (412) connecting the first electrically conductive layer (410) to the controller (392), wherein
- the electrode layer (300) and the a first compressible and electrically insulating layer (210) are arranged between the cover layer (510, 520) and the first electrically conductive layer (410), and
- the first transmitter (394a) is configured to send information related to the capacitances of the electrodes (301, 302).

11. A method for measuring a load (F) that is distributed on a primary area (Af), the method comprising
- arranging available a set of sensor units (100, 100a, 100b, 100c, 100d), the set of sensor units comprising at least a first sensor unit (100a) and a second sensor unit (100b),
- arranging the sensor units of the set of sensor units such that
• a first part of the load (F) affects the first sensor unit (100a),
• a second part of the load (F) affects the second sensor unit (100b),
and
• the set of sensor units cover the whole primary area (Af),
- determining, using the first sensor unit (100a), first information (11) indicative of a first part of the load (F),
- determining, using the second sensor unit (100b), second information (12) indicative of the second part of the load (F),
- transmitting the first information (11) and receiving the first information (11), and
- determining the load using (F) the first information (11) and the second information (12).

12. The method of claim 11, wherein
- the set of sensor units further comprises a third sensor unit (100c) and a fourth sensor unit (100d), the method comprising
- arranging the sensor units of the set of sensor units such that
• a third part of the load (F) affects the third sensor unit (100c),
• a fourth part of the load (F) affects the fourth sensor unit (100d),
- determining, using the third sensor unit (100c), third information (13) indicative of a third part of the load (F),
- determining, using the fourth sensor unit (100d), fourth information (14) indicative of the fourth part of the load (F),
- transmitting and receiving the third information (13),
- transmitting and receiving the fourth information (14), and
- determining the load (F) using also the third information (13) and the fourth information (14).

13. The method of claim 11 or 12, comprising
- fixing each sensor unit of the set of sensor units to at least one other sensor unit of the set of sensor units, e.g. using a fastening member (160, 170, 180), such that a cross-sectional area (Acs) of a smallest convex space encompassing all of the sensor units of the set of sensor units is at most 10 % greater than the total cross-sectional area of the sensor units, when separate from each other;
preferably, the method comprises
- detaching the sensor units of the set of sensor units from each other and/or from the fastening members used for attaching the sensor units to each other.

14. The method of any of the claims 11 to 13, comprising
- arranging the sensor units such that a plane that has a normal to a direction of the thickness of the first sensor unit (100a) intersects all the sensor units of the set of sensor units.

15. A sensor unit (100), comprising
- a primary surface (102),
- a secondary surface (104),
- a first electrically conductive layer (410),
- an electrode layer (300) comprising a set of electrodes, the set of electrodes comprising at least a first electrode (301) and a second electrode (302),
- a first compressible and electrically insulating layer (210) in between the electrode layer (300) and the first electrically conductive layer (410),
- a controller (392) configured to determine a capacitance of each one of the electrodes of the set of the electrodes,
- a first wire (311) connecting the first electrode (301) to the controller (392),
- a second wire (312) connecting the second electrode (302) to the controller (392),
- a common wire (412) connecting the first electrically conductive layer (410) to the controller (392),
- a transmitter (394) configured to send information related to the capacitances of the electrodes (301, 302),
- a cover layer (510, 520) forming the primary surface (102) or the secondary surface (104), and
- a first primary fastener (111) for fastening the sensor unit (100) to a second sensor unit (100b), wherein
- the electrode layer (300) and the a first compressible and electrically insulating layer (210) are arranged between the cover layer (510, 520) and the first electrically conductive layer (410),
- a stiffness of a layer (410, 510, 520) that forms the primary surface (102) is at least 100 Nm, wherein the stiffness equals an elastic modulus of the layer (410, 510, 520) that forms the primary surface (102) multiplied by a third power of a thickness of the layer (410, 510, 520) that forms the primary surface (102), and
- a Shore hardness of the layer (410, 510, 520) that forms the secondary surface (104) is at least 70 Sh(A) and/or a Janka hardness of the layer (410, 510, 520) that forms the secondary surface (104) is at least 1800 N.
